(19) Europäisches Patentamt
European Patent Office
Office européen des brevets

(11) **EP 3 547 267 A1**

(12) **EUROPEAN PATENT APPLICATION**
published in accordance with Art. 153(4) EPC

(43) Date of publication:
**02.10.2019 Bulletin 2019/40**

(51) Int Cl.:
***G06T 19/00*** *(2011.01)* ***B25J 9/22*** *(2006.01)*

(21) Application number: **17873066.9**

(22) Date of filing: **24.11.2017**

(86) International application number:
**PCT/JP2017/042155**

(87) International publication number:
**WO 2018/097223 (31.05.2018 Gazette 2018/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.11.2016 JP 2016227546**

(71) Applicant: **Kyoto University**
**Kyoto-shi, Kyoto 606-8501 (JP)**

(72) Inventors:
• **MATSUNO, Fumitoshi**
 **Kyoto-shi**
 **Kyoto 606-8501 (JP)**
• **MURATA, Ryosuke**
 **Kyoto-shi**
 **Kyoto 606-8501 (JP)**
• **ENDO, Takahiro**
 **Kyoto-shi**
 **Kyoto 606-8501 (JP)**

(74) Representative: **Hoffmann Eitle**
**Patent- und Rechtsanwälte PartmbB**
**Arabellastraße 30**
**81925 München (DE)**

(54) **ROBOT CONTROL SYSTEM, MACHINE CONTROL SYSTEM, ROBOT CONTROL METHOD, MACHINE CONTROL METHOD, AND RECORDING MEDIUM**

(57)  An operation computer displays, in a display such as a head-mounted display, a field of view image that shows what appears in a field of view of an operator if the operator present in a first space is in a second space where a robot is present. The operation computer then controls the robot to perform a task in accordance with a motion of the operator.

FIG. 2

## Description

### Technical Field

The present invention relates to a technology for controlling a motion of a machine such as a robot according to a motion of an operator.

### Background Art

In order to cause a robot to perform a task in real time, an operator usually operates the robot. Technologies for robot operation include, for example, technologies provided below.
A visual device described in Patent Literature 1 controls an imaging device, mounted on a slave unit as a robot, to capture an image according to a head movement of an operator and controls a head-mounted display to project the image.
According to a remote control system described in Patent Literature 2, before spraying work is started, a left camera and a right camera of a sprayer 1 are used to capture an image of a spray target surface of a tunnel, and the image thus captured is stored into a memory. When the spraying work is started, a position, a direction, and so on of a spray nozzle are measured, a spray quantity and a spray thickness of the spray target surface are estimated, an image of mortar to be sprayed is created, and the resultant is written into the memory. Further, the left camera and the right camera capture an image of the spray nozzle which is spraying. An image synthesizing part synthesizes the image of the spray nozzle and images of the spray target surface and the image of the mortar to be sprayed. A three-dimensional image display portion displays the resultant image three-dimensionally. An operator controls the sprayer remotely while looking at the image.
Non-patent literature 1 discloses a method for operating a humanoid robot having a structure similar to a body structure of a human. Non-patent literature 2 discloses a remote control system of a mobile manipulator.
Non-Patent Literature 3 discloses a method for reproducing, in a virtual space, a remote location in which a robot is present and presenting, in the virtual place, a tool for achieving a model of a human hand and a task.
When operating a robot which has a structure different from a body structure of a human, an operator uses an input device such as a joystick or a game controller. Hereinafter, such a robot is a "non-humanoid robot".

### Related Art Literature

#### Patent Literature

    Patent Literature 1: Japanese Unexamined Patent Application Publication No. 05-228855
    Patent Literature 2: Japanese Unexamined Patent Application Publication No. 06-323094

#### Non-Patent Literature

    Non-Patent Literature 1: "Design of TELESAR V for transferring bodily consciousness in telexistence", by C. L. Fernando, M. Furukawa, T. Kurogi, S. Kamuro, K. Sato, K. Minamizawa, and S. Tachi, in Intelligent Robots and Systems (IROS), 2012 IEEE/RSJ International Conference on.IEEE, 2012, pp. 5112-5118
    Non-Patent Literature 2: "Whole body multi-modal semi-autonomous teleoperation system of mobile manipulator", by C. Ha, S. Park, J. Her, I. Jang, Y. Lee, G. R. Cho, H. I. So n, and D. Lee, in IEEE International Conference on Robotics and Automation (ICRA). Seattle, WA. MAY 26-30, 2015. IEEE, 2015
    Non-Patent Literature 3: "Teleoperation based on the hidden robot concept", by A. Kheddar, Systems, Man and Cybernetics, Part A: Systems and Humans, IEEE Transactions on, vol. 31, no. 1, pp.1-13, 2001

### Summary of Invention

### Technical Problem

In the conventional technologies, in order to control a motion of a non-humanoid robot, it is necessary for an operator to understand in advance what kind of operation on an input device leads to what kind of motion of the non-humanoid robot. The operator also needs to get accustomed to the operation.

A shorter time is desirable for the operator to get accustomed to the operation for controlling the motion of the non-humanoid robot. In particular, in the case where a beginner uses the non-humanoid robot at a time-critical location, e.g., a disaster site or an accident site, he/she desirably gets accustomed to controlling the motion of the non-humanoid robot as soon as possible. The same is similarly applied to a case of controlling a motion of a machine other than a robot.

The present invention has been achieved in light of such a problem, and therefore, an object of an embodiment of the present invention is to provide a system that enables an operator to control a motion of a machine such as a robot without the operator not being aware of the presence of the machine.

## Solution to Problem

A robot control system according to one embodiment of the present invention is a robot control system for controlling a robot to perform a task while an image displayed in a display is shown to an operator. The robot control system includes a display means configured to display, in the display, a field of view image that shows what appears in a field of view of the operator if the operator is present in a space where the robot is present; and a control means configured to generate a control instruction to cause the robot to perform a task in accordance with a motion of the operator, and to send the control instruction to the robot.

The "task" includes: a difficult task, e.g., a task of holding a pen or a task of drawing a circle with a pen; an easy task, e.g., a task of simply moving a particular part; and a task that is performed in response to different motions of a human and a robot. The task performed in response to different motions is, for example, a task of taking a picture. The human performs the picture taking task by making a gesture of pressing a shutter button of a camera. The robot performs the picture taking task by capturing an image with a camera mounted thereon and saving the image. Thus, motions for the task performed by the robot are sometimes invisible.

A machine control system according to one embodiment of the present invention is a machine control system for controlling a machine. The machine control system includes a display means configured to display, in a display, a field of view image that shows what appears in a field of view of an operator if the operator is at a position near the machine in a space where the machine is present; and a control means configured to, in response to a motion of the operator, control the machine so that the motion causes a change in the machine if the operator is present at the position of the space.

## Advantageous Effects of Invention

According to the present invention, the operator can operate a machine such as a robot without being aware of the presence of the machine.

## Brief Description of Drawings

Fig. 1 is a diagram showing an example of the overall configuration of a remote work system.
Fig. 2 is a diagram showing an example of a first space, a second space, and a virtual space.
Fig. 3 is a diagram showing an example of the hardware configuration of an operation computer.
Fig. 4 is a diagram showing an example of the configuration of a work support program.
Fig. 5 is a diagram showing an example of the hardware configuration of a robot.
Fig. 6 is a diagram showing an example of the flow of data for initialization.
Fig. 7 shows an example of the positional relationship between a second space coordinate system and a robot coordinate system.
Fig. 8 shows an example of an angle θhip, a length Lleg, and a distance Dstep.
Fig. 9 is a diagram showing an example of the flow of data when a robot travels.
Fig. 10 is a diagram showing an example of an angle θbody.
Fig. 11 shows an example of a travel direction and a travel distance of a robot.
Fig. 12 is a diagram showing an example of the flow of data when an image of a virtual space is displayed.
Fig. 13 is a diagram showing an example of an image displayed in a head-mounted display.
Fig. 14 is a diagram showing an example of the flow of data when a motion of a gripper portion is controlled.
Fig. 15 is a diagram showing an example of placing a virtual robot in a virtual space and a shift of an avatar.
Fig. 16 is a diagram showing an example of an image displayed in a head-mounted display.
Fig. 17 is a diagram showing an example of the flow of data when measures are taken against an obstacle.
Fig. 18 is a diagram showing an example of cooperation between a robot and an assistant robot.

Fig. 19 is a flowchart depicting an example of the flow of processing for supporting work at a remote location.

Fig. 20 is a flowchart depicting an example of the flow of processing for supporting work at a remote location.

Fig. 21 is a flowchart depicting an example of the flow of processing for supporting work at a remote location.

Fig. 22 is a diagram showing an example of a first space, a second space, and a virtual space for the case where a power assist suit is a control target.

Fig. 23 is a diagram showing a second example of a first space, a second space, and a virtual space for the case where a power assist suit is a control target.

Fig. 24 is a diagram showing an example of experimental results.

## Mode(s) for Carrying Out the Invention

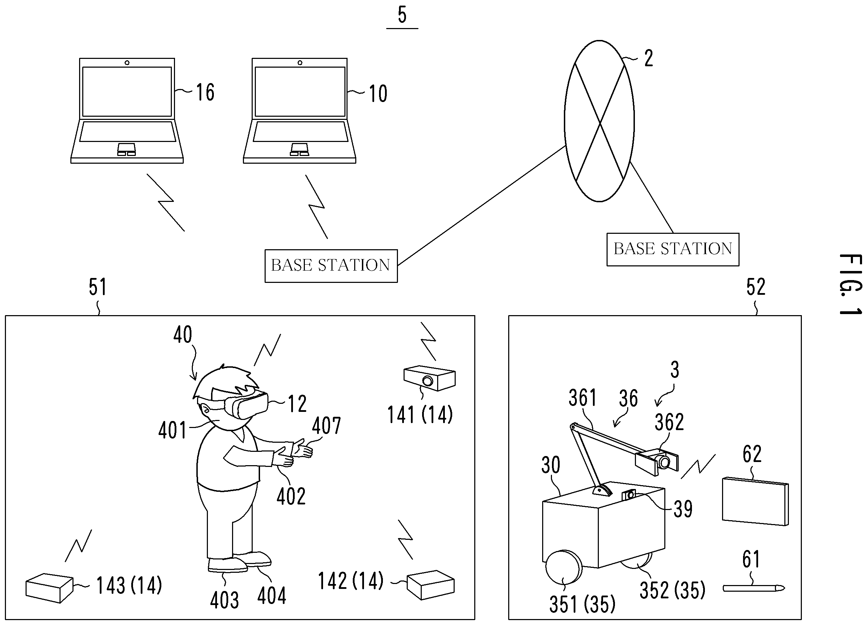

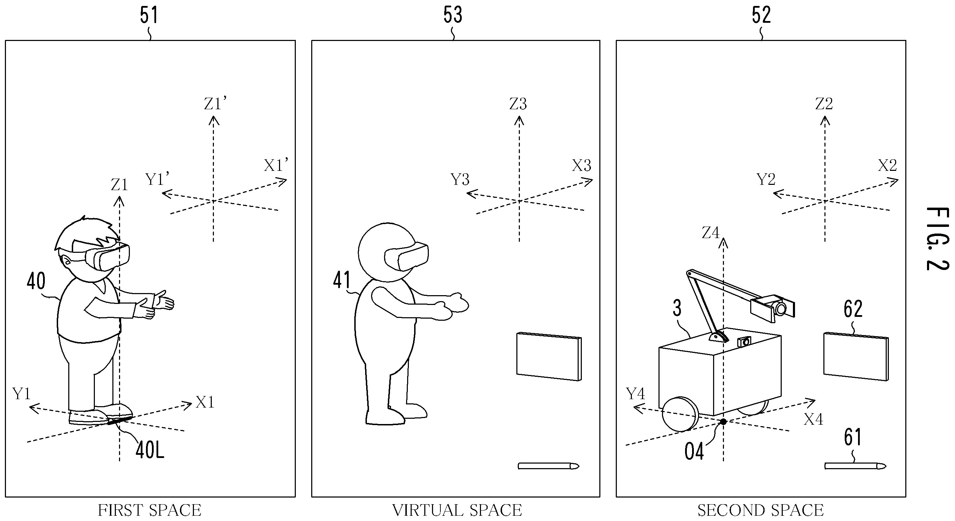

Fig. 1 is a diagram showing an example of the overall configuration of a remote task execution system 5. Fig. 2 is a diagram showing an example of a first space 51, a second space 52, and a virtual space 53.

The remote task execution system 5 shown in Fig. 1 enables an operator 40, who is in the first space 51, to perform a task in the second space 52 at a remote location. For example, the remote task execution system 5 enables the operator 40 to perform a task of finding a pen 61 and a panel 62 in the second space 52 to draw a picture with the pen 61 in the panel 62.

The second space 52 includes a robot 3. The robot 3 directly handles a variety of objects in the second space 52.

The virtual space 53 is a space that a computer virtually reproduces the second space 52. In the virtual space 53, an avatar 41 of the operator 40 is placed. The operator 40 can use a head-mounted display 12 to see the virtual space 53. This makes the operator 40 feel as if the operator 40 lived through the avatar 41 and were present in the virtual space 53.

When the operator 40 moves, the avatar 41 also moves in a similar manner, and further the robot 3 also moves therewith.

The functionality of the remote task execution system 5 enables the operator 40, who is in the first space 51, to perform a task in the second space 52 at a remote location without paying attention to the robot 3. The following describes the mechanism thereof.

Referring to Fig. 1, the remote task execution system 5 is configured of an operation computer 10, the head-mounted display 12, a plurality of color-depth sensors 14, a motion capture computer 16, a communication line 2, the robot 3, and so on.

The communication line 2 is a communication line such as the Ethernet (registered trademark), the Internet, a public line, or an exclusive line. The communication line 2 is used for various communication described below, such as communication between the operation computer 10 and the robot 3.

The operator 40 is present in the first space 51. The operator 40 wears the head-mounted display 12 on the head of the operator 40. The head-mounted display 12 is, for example, a non-transparent HMD or a transparent HMD. Examples of the non-transparent HMD include Oculus Rift developed by Oculus VR, Inc. Examples of the transparent HMD include HoloLens developed by Microsoft and Google Glass developed by Google. The following description takes an example where the head-mounted display 12 is a non-transparent HMD.

The color-depth sensors 14 are placed in the first space 51 so that they make measurements all surfaces, without blind spots, including the front, rear and side surfaces of an object disposed around the center of the first space 51. The following describes an example where the color-depth sensors 14 are three color-depth sensors 141-143.

The robot 3 is present in the second space 52. The second space 52 includes a variety of objects such as the pen 61 and the panel 62. An environment is possible in which a tag for Radio Frequency Identification (RFID) is attached to each of the objects and the robot 3 reads, thereinto, information on the objects.

The pen 61 is used to draw a picture in the panel 62. The panel 62 is a white board and the pen 61 is a non-permanent marker. Alternatively, the panel 62 may be a capacitive touch-sensitive panel display. In such a case, the pen 61 is a touch pen.

The operation computer 10 is placed in such a place that the operation computer 10 can perform communication with the head-mounted display 12 and the motion capture computer 16. The operation computer 10 may be placed in or outside the first space 51.

The motion capture computer 16 is placed in such a place that the motion capture computer 16 can perform communication with the operation computer 10 and the color-depth sensors 141-143. The motion capture computer 16 may be placed in or outside the first space 51.

[Outline of each device]

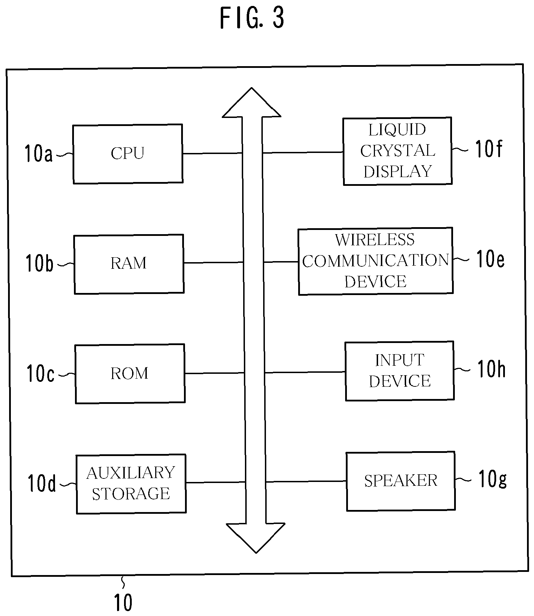

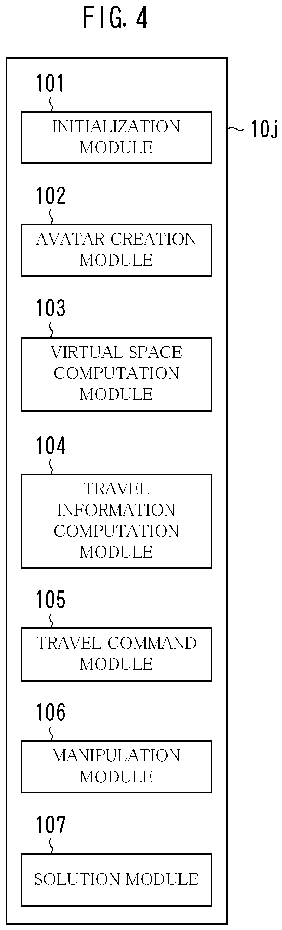

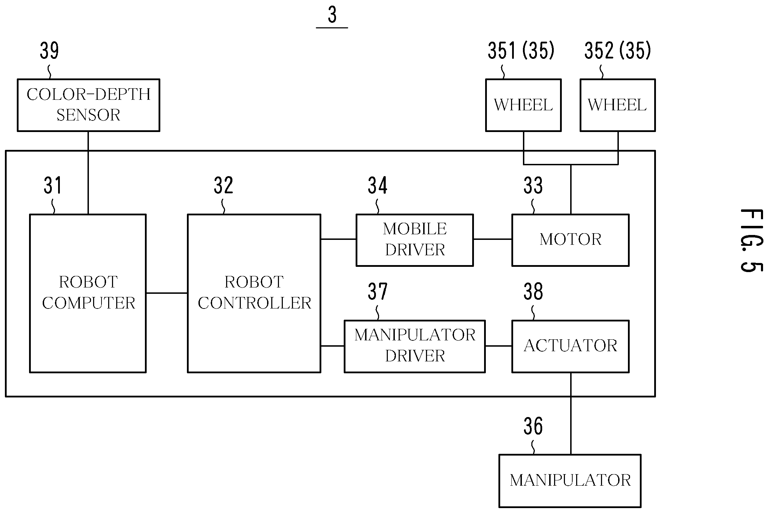

Fig. 3 is a diagram showing an example of the hardware configuration of the operation computer 10. Fig. 4 is a diagram showing an example of the configuration of a task support program 10j. Fig. 5 is a diagram showing an example of the hardware configuration of the robot 3.

The main functions of the individual devices of the remote task execution system 5 are described below. The processing by the devices are detailed later.

The operation computer 10 principally generates a command to be given to the robot 3 based on a motion of the operator 40, and places the avatar 41 of the operator 40 in the virtual space 53 as shown in Fig. 2 to generate image data on an image showing what the virtual space 53 is like. The following describes an example in which the operation computer 10 is a personal computer.

Referring to Fig. 3, the operation computer 10 is configured of a Central Processing Unit (CPU) 10a, a Random Access Memory (RAM) 10b, a Read Only Memory (ROM) 10c, an auxiliary storage 10d, a wireless communication device 10e, a liquid crystal display 10f, a speaker 10g, an input device 10h, and so on.

The wireless communication device 10e performs communication with the head-mounted display 12, the motion capture computer 16, and the robot 3 via a wireless base station for the communication line 2.

The liquid crystal display 10f displays a message screen, for example. The speaker 10g outputs an audio message.

The input device 10h is a keyboard or a pointing device. The input device 10h is used for the operator 40 or an administrator to enter data or a command into the operation computer 10.

The ROM 10c or the auxiliary storage 10d stores, therein, the task support program 10j. The task support program 10j is to show the operator 40 the virtual space 53 or to control the robot 3.

Referring to Fig. 4, the task support program 10j is configured of software modules such as an initialization module 101, an avatar creation module 102, a virtual space computation module 103, a travel information computation module 104, a travel command module 105, a manipulation module 106, and a solution module 107. In this embodiment, the travel command module and the manipulation module are provided separately. However, in the case of the robot 3 with a redundant degree of freedom, the control may be performed with a travel base and a manipulator taken as a single system.

The initialization module 101 performs initialization processing before a task starts or restarts.

The avatar creation module 102 creates data on the avatar 41 in accordance with a result of measurement of a three-dimensional shape of the operator 40.

The virtual space computation module 103 calculates the position and attitude of an object in the virtual space 53. The virtual space computation module 103 also generates image data on an image of the virtual space 53 for the case where the virtual space 53 is seen from a specific position toward a specific direction of the virtual space 53. The virtual space computation module 103 can also generate image data on an image of the virtual space 53 for the case where the avatar 41 is placed in the virtual space 53. The technology for the calculation and generation is, for example, Simultaneous Localization And Mapping (SLAM).

The travel information computation module 104 calculates a travel distance and a travel direction based on the motion of the operator 40.

The travel command module 105 generates a command to shift the robot 3 in accordance with the motion of the operator 40 to give the command to the robot 3.

The manipulation module 106 generates a command to move an arm of the robot 3 in accordance with the motion of the operator 40 to give the command to the robot 3.

The solution module 107 is to deal with the case where the robot 3 comes across an obstacle.

The task support program 10j is loaded into the RAM 10b and executed by the CPU 10a. The auxiliary storage 10d is, for example, a Solid State Drive (SSD) or a hard disk drive.

The head-mounted display 12 is worn on the head of the operator 40 as described above. The head-mounted display 12 receives image data from the operation computer 10 to display an image showing the virtual space 53.

Each of the color-depth sensors 141-143 is an RGB-D camera or a depth camera. The color-depth sensors 141-143 each measures a color of each point on the surface of the body of the operator 40, and a distance between that each point and the subject color-depth sensors 141-143. This obtains Red Green Blue Depth (RGBD) data on each of the points every predetermined time period Ta. The predetermined time period Ta can be determined freely depending on the level of analytical capability of the motion of the operator 40. The predetermined time period Ta is, for example, 0.1 seconds.

Every time the RGBD data is obtained, the color-depth sensors 141-143 send the RGBD data to the motion capture computer 16. Each of the color-depth sensors 141-143 is, for example, Kinect sensor developed by Microsoft.

When receiving the RGBD data from the color-depth sensors 141-143, the motion capture computer 16 determines the three-dimensional shape of the whole body of the operator 40 based on the RGBD data and positions at which the color-depth sensors 141-143 are located. The motion capture computer 16 then sends three-dimensional data showing the three-dimensional shape thus determined to the operation computer 10. The motion capture computer 16 is, for example, a computer in which Kinect for Windows SDK developed by Microsoft is installed.

As described above, the motion capture computer 16 determines the three-dimensional shape of the whole body of the operator 40 every predetermined time period Ta. Change in three-dimensional shape represents a motion of the operator 40. It can thus be said that the motion capture computer 16 captures the motion of the operator 40.

Referring to Fig. 1 or Fig. 5, the robot 3 includes a casing 30, a robot computer 31, a robot controller 32, a motor 33, a mobile driver 34, two or four wheels 35, a manipulator 36, a manipulator driver 37, an actuator 38, and a color-depth sensor 39.

The robot computer 31 is to administer an overall operation of the robot 3. For example, when receiving particular data from the operation computer 10, the robot computer 31 transfers the particular data to the robot controller 32. The robot computer 31 also transfers data obtained by the manipulator 36 to the operation computer 10.

The robot computer 31 also models objects around the robot computer 31 based on the RGBD data obtained from the color-depth sensor 39, and calculates the position and attitude of each of the objects. The robot computer 31 is housed in the casing 30.

The color-depth sensor 39 is an RGB-D camera or a depth camera. The color-depth sensor 39 is the Kinect sensor, for example. The color-depth sensor 39 is provided on the upper surface of the casing 30 so that it can make measurements forward of the robot 3. Alternatively, the color-depth sensor 39 may be provided at a position other than the upper surface of the casing 30. For example, the color-depth sensor 39 may be provided in a gripper portion 362. Alternatively, a plurality of the color-depth sensors 39 may be provided. For example, four color-depth sensors 39 may be provided on the upper surface of the casing 30 so that the color-depth sensors 39 are oriented toward the front, the right, the left, and the back of the robot 3.

The robot controller 32 is housed in the casing 30. The robot controller 32 gives a command to the mobile driver 34 or the manipulator driver 37 so that the robot 3 moves according to the motion of the operator 40.

The manipulator 36 grips or moves an object as with human's hand or arm. The manipulator 36 is provided on the upper surface of the casing 30. The manipulator 36 includes an arm portion 361 and the gripper portion 362.

The arm portion 361 has a prismatic joint and a rotary joint which provide fingertips with at least 6 degrees of freedom. Bending or straightening the joints change the position and attitude of the arm portion 361. The gripper portion 362 has a plurality of fingers. The gripper portion 362 adjusts a distance between the fingers, so that the gripper portion 362 can catch and release an object.

The actuator 38 drives the arm portion 361 and the gripper portion 362. The manipulator driver 37 controls the actuator 38 based on a command given by the robot controller 32 so as to drive the arm portion 361 or the gripper portion 362. The position of the gripper portion 362 with respect to the casing 30 is determined, for example, with a rotary encoder or the like which makes measurements of an angle of each joint.

The height of the upper surface of the casing 30 from the floor is approximately 50-100 centimeters. The arm portion 361 is a little longer than the length between the base of human's arm and the fingertip. The arm portion 361 is approximately 60-100 centimeters in length. The distance between fingers on both ends of the gripper portion 362 in open state is a little longer than the distance between the thumb and the pinky finger of human's opened hand. The distance between the fingers on both ends of the gripper portion 362 is approximately 20-30 centimeters.

This structure enables the gripper portion 362 to move within the same area as a reachable area by a human hand when the human stands at the same position as the robot 3 stands, or within an area larger than the reachable area. The movable area of the operator 40 may be different from the movable area of the robot 3. As described later, if the robot 3 is not capable of performing a task in accordance with the motion of the operator 40 due to difference between the operator 40 and the robot 3 in movable area, a Computer Graphics (CG) of a robot is introduced into the virtual space. This makes the operator 40 recognize that the robot 3 is not capable of performing the task, and then recovery processing to address the situation is performed.

The casing 30 has, on each of the right and left surfaces, one or two wheels 35. The following describes an example in which the casing 30 has, as the wheels 35, a right wheel 351 and a left wheel 352 on the right and left surfaces, respectively.

The motor 33 is housed in the casing 30. The motor 33 drives the right wheel 351 and the left wheel 352. The mobile driver 34 is housed in the casing 30. The mobile driver 34 controls the motor 33 to drive the right wheel 351 and the left wheel 352 based on a command from the robot controller 32, which causes the robot 3 to move.

[Processing for the case where object in the second space 52 is handled]

The description goes on to processing by the individual devices for the case where the operator 40, who is in the first space 51, handles an object in the second space 52.

[Initialization]

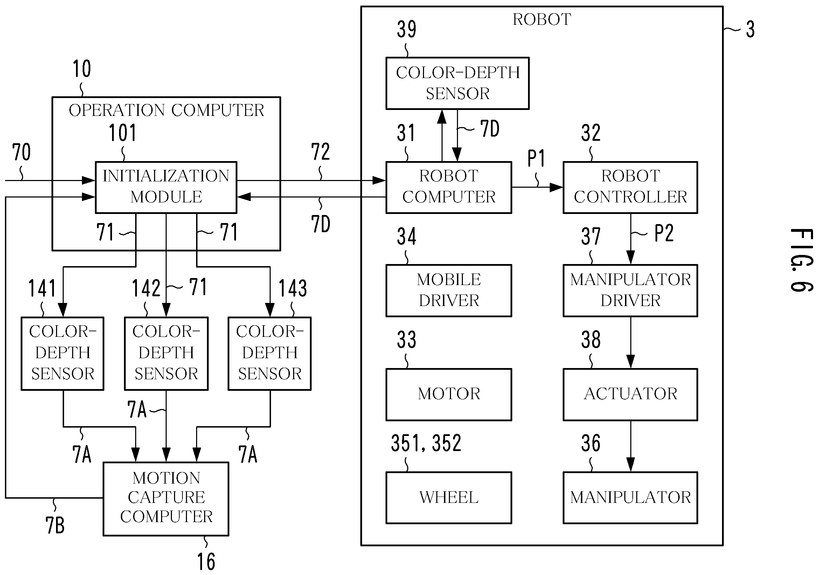

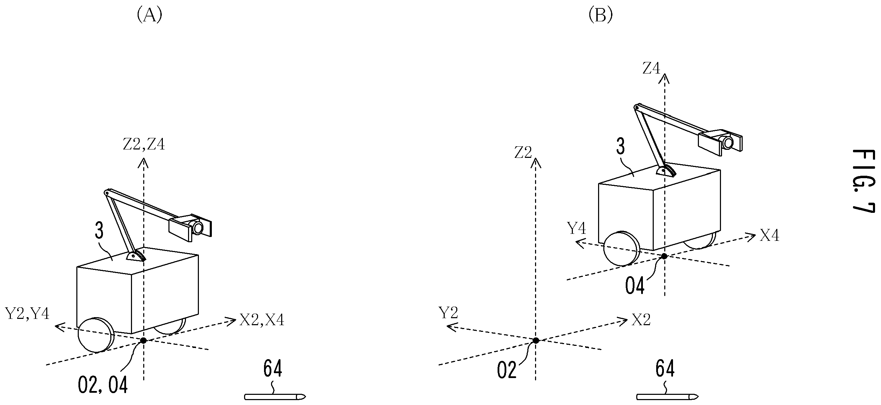

Fig. 6 is a diagram showing an example of the flow of data for initialization. Fig. 7 shows an example of the positional relationship between a second space coordinate system and a robot coordinate system.

Before a task is started, the operator 40 stands at a position surrounded by the color-depth sensors 141-143 of the first space 51 with his/her right foot 403 and left foot 404 put together. The operator 40 enters a start command 70 into the operation computer 10.

In response to the entry, the operation computer 10 performs initialization by using the initialization module 101. The initialization is described below with reference to Fig. 6.

In response to the start command 70 entered, the operation computer 10 sends a measurement command 71 to the color-depth sensors 141-143.

When the hand of the operator 40 cannot reach the operation computer 10, the operator 40 may use a wireless device to enter the start command 70, or, alternatively, an assistant may enter the start command 70 on behalf of the operator 40. Yet alternatively, another configuration is possible in which the operator 40 enters the start command 70 and the measurement command 71 may be sent after the lapse of a predetermined amount of time, e.g., after 10 seconds since the start command 70 was entered.

The operator 40 desirably remains at rest without moving until the initialization is completed. In particular, a face 401, a right hand 402, the right foot 403, and the left foot 404 of the operator 40 desirably remain at rest.

Upon receipt of the measurement command 71, each of the color-depth sensors 141-143 starts measurements of colors of points on the surface of the body of the operator 40 and a distance between each of the points and the subject color-depth sensors 141, 142, or 143. The measurements are made every predetermined time period Ta as described above. Every time obtaining RGBD data 7A by the measurements, the color-depth sensors 141-143 send the RGBD data 7A to the motion capture computer 16.

The motion capture computer 16 receives the RGBD data 7A from the color-depth sensors 141-143 and determines a three-dimensional shape of the whole body of the operator 40 based on the sets of RGBD data 7A. The motion capture computer 16 then sends three-dimensional data 7B showing the determined three-dimensional shape to the operation computer 10.

The operation computer 10 receives a first set of three-dimensional data 7B to detect, from the three-dimensional shape shown in the three-dimensional data 7B, the right hand 402, the right foot 403, and the left foot 404. The operation computer 10 then calculates a position of the right hand 402 in an operator coordinate system. The position thus calculated is hereinafter referred to as an "initial position P0". In the case of work with both hands, the operation computer 10 detects not only the position of the right hand 402 but the position of the left hand 407.

The "operator coordinate system" is a three-dimensional coordinate system as that shown in Fig. 2. To be specific, in the operator coordinate system, the center of a line 40L that connects the toe of the right foot 403 and the toe of the left foot 404 is used as the origin, the direction from the toe of the right foot 403 toward the toe of the left foot 404 is used as an X1-axis direction, the vertical upward direction is used as a Z1-axis direction, and the direction that is orthogonal to the X1-axis and the Z1-axis and extends from the front to the back of the operator 40 is used as a Y1-axis direction.

The operation computer 10 sends, to the robot computer 31, an initialization command 72 that indicates the initial position P0 as parameters.

The robot computer 31 receives the initialization command 72 and instructs the robot controller 32 to initialize the position of the gripper portion 362. At this time, the robot computer 31 informs the robot controller 32 of the initial position P0 indicated in the initialization command 72.

The robot controller 32 follows the instruction to instruct the manipulator driver 37 to shift the gripper portion 362 to a position, in the robot coordinate system, corresponding to the initial position P0.

The "robot coordinate system" is a three-dimensional coordinate system. In the robot coordinate system, the center of a line on which ground positions of the right wheel 351 and the left wheel 352 are is used as the origin, the direction from the right wheel 351 toward the left wheel 352 is used as an X4-axis direction, the vertical upward direction is set at a Z4-axis direction, and the direction that is orthogonal to the X4-axis and the Z4-axis and extends from the front to the back of the robot 3 is used as a Y4-axis direction. The center is hereinafter referred to as a "robot origin O4".

To be specific, when the initial position P0 is (X1a, Y1a, Z1a), the robot controller 32 instructs the manipulator driver 37 to shift the gripper portion 362 to a position (X1a, Y1a, Z1a) in the robot coordinate system.

At this time, the robot controller 32 informs the manipulator driver 37 of the position of the robot coordinate system.

The manipulator driver 37 then controls the actuator 38 to shift the gripper portion 362 to the position informed. The manipulator driver 37 also controls the actuator 38 so that the gripper portion 362 opens completely, namely, each distance between the neighboring fingers of the gripper portion 362 has a distance as longest as possible.

In parallel with the instruction to initialize the position of the gripper portion 362, the robot computer 31 controls the color-depth sensor 39 to start measurements forward of the robot 3.

In response to the instruction, the color-depth sensor 39 makes measurements every predetermined time period Ta. Every time obtaining RGBD data 7C by the measurement, the color-depth sensor 39 sends the RGBD data 7C to the robot computer 31. Another configuration is possible in which, after the initialization, the measurements forward of the robot 3 and the transmission of the RGBD data 7C may be performed only while the robot 3 travels.

Every time receiving the RGBD data 7C, the robot computer 31 sends the same to the operation computer 10.

In the meantime, it is necessary to set the origin O2 of the second space 52, an X2-axis direction, an Y2-axis direction, and a Z2-axis direction thereof. With this being the situation, as shown in Fig. 7(A), the operation computer 10 sets the origin O2 of which the position, in the second space 52, is the same as the position of the robot origin O4 at the time of the initialization. The operation computer 10 further sets the X2-axis direction that is a direction from the right wheel 351 toward the left wheel 352 at this point in time. The operation computer 10 further sets the Z2-axis direction that is the vertical upward direction. The operation computer 10 further sets the Y2-axis direction that is a direction which is orthogonal to the X2-axis and the Z2-axis and extends from the front to the back of the robot 3 at this point in time. A coordinate system including the X2-axis, the Y2-axis, and the Z2-axis is referred to as a "second space coordinate system".

At the time of the initialization, the X, Y, and Z axes of the second space coordinate system, namely, the X2-axis, Y2-axis, and Z2-axis thereof respectively correspond to the X, Y, and Z axes of the robot coordinate system, namely, the X4-axis, Y4-axis, and Z4-axis thereof. In the second space coordinate system, the robot 3 looks toward the negative direction of the Y2-axis and stops at the origin O2. However, in relation to the robot 3 travelling in the second space 52, namely, in the second space coordinate system, the position in the robot coordinate system changes with respect to the second space coordinate system as shown in Fig. 7(B).

The initialization by the initialization module 101 is completed through the foregoing processing. After the initialization, the avatar 41 and the robot 3 move according to the motion of the operator 40. In other words, the operator 40, the avatar 41, and the robot 3 move in association with one another. The operator 40 feels as if the avatar 41 moves in accordance with the motion of the operator 40 and the robot 3 moves autonomously in accordance with the motion of the avatar 41. The operator 40 thus can handle an object of the second space 52 through the robot 3 without touching the object directly and without being aware of the presence of the robot 3. Processing for displaying an image of the virtual space 53 is performed in parallel with processing for shifting the robot 3. The description goes on to both the processing.

[Travel of robot 3]

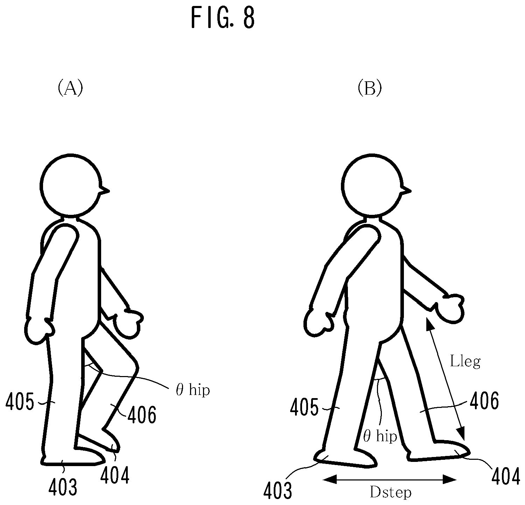

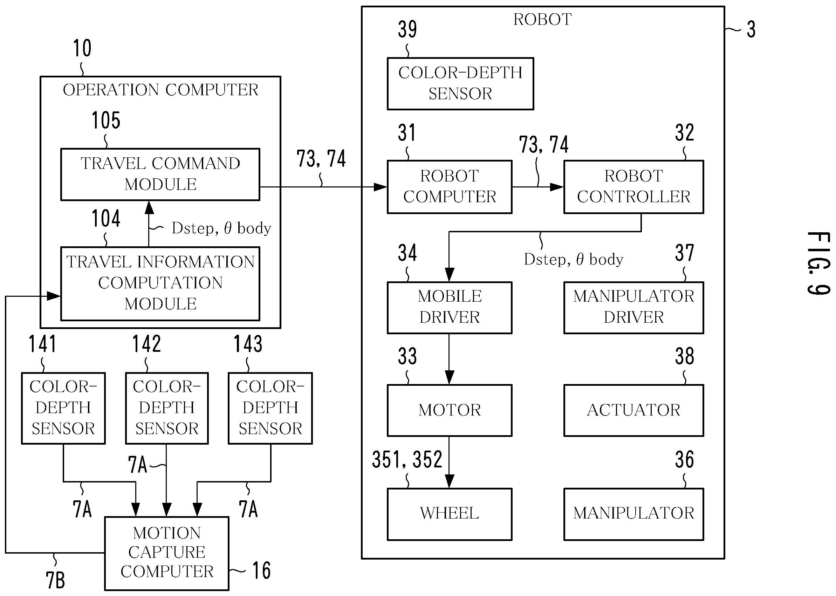

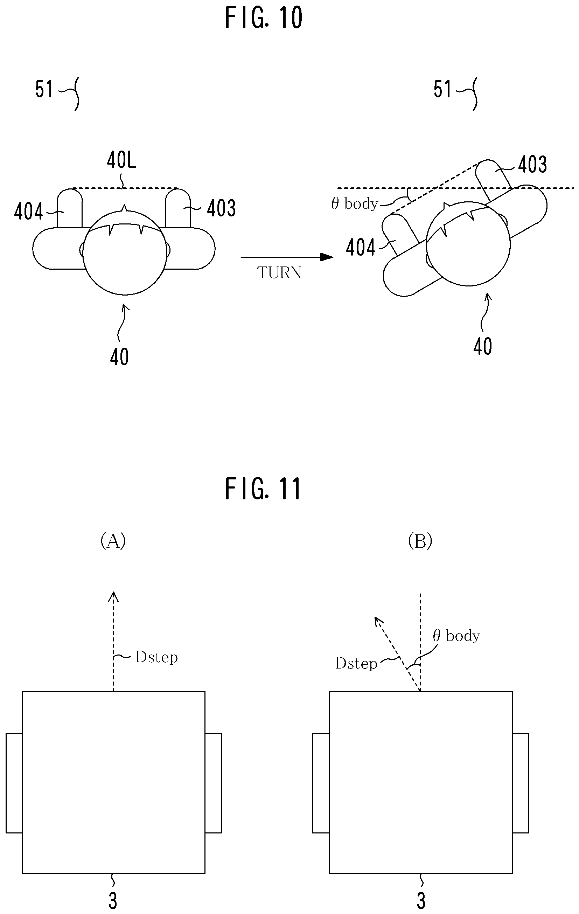

Fig. 8 shows an example of an angle θhip, a length Lleg, and a distance Dstep. Fig. 9 is a diagram showing an example of the flow of data when the robot 3 travels. Fig. 10 is a diagram showing an example of an angle θbody. Fig. 11 shows an example of a travel direction and a travel distance of the robot 3.

Once the operator 40 walks or walks in place in the first space 51, the avatar 41 travels and the robot 3 also travels. Further, the operator 40 turns, which enables the robot 3 to change a direction toward which the robot 3 moves. The following describes processing for the case where the robot 3 moves forward with reference to Fig. 8. The description takes an example where the operator 40 walks in place. The travel of the avatar 41 is described later. Processing for the case where the operator 40 walks in the first space 51 is also described later.

The operation computer 10 calculates a distance and direction toward which to shift the robot 3 by the travel information computation module 104 in the following manner.

As described above, even after the completion of the initialization, the motion capture computer 16 sends the three-dimensional data 7B to the operation computer 10 every predetermined time period Ta.

In the meantime, while the operator 40 raises and puts down a left leg 406 of the operator 40 one time, an angle θhip between a right leg 405 and the left leg 406 of the operator 40 changes as follows. When the operator 40 starts raising the left foot 404, the angle θhip gradually increases from 0 (zero) degrees. The angle θhip has the greatest value when the left foot 404 is raised to a highest position as shown in Fig. 9(A). When the operator 40 starts putting down the left foot 404, the angle θhip gradually decreases to return to 0 (zero) degrees.

The operation computer 10 determines, based on the three-dimensional data 7B, whether there is a change in position of the right foot 403 or the left foot 404. If determining that there is such a change, then the operation computer 10 calculates an angle θhip between the right leg 405 and the left leg 406 every predetermined time period Ta.

The operation computer 10 also calculates a length Lleg of the right leg 405 or the left leg 406 based on the three-dimensional data 7B. The length Lleg is calculated only once. The length Lleg may be calculated beforehand at the time of the initialization.

The operation computer 10 calculates a distance Dstep based on the following formula (1).
[Math. 1]

$$D_{step}(T_i) = \int_{T_{i-1}}^{T_i} L_{leg}\, \dot{\theta}_{hip}\, dT \quad \text{...\, ...} \quad (1)$$

The distance Dstep is an expected distance that the operator 40 would walk instead of walking in place.

Stated differently, the operation computer 10 calculates the distance Dstep based on the length Lleg and a ratio of change in angle θhip for predetermined time period Ta (interval time). In the formula, time $T_i$ is the i-th sample time and time $(T_i-1)$ is the immediately preceding time (time Ta before the time $T_i$) of the time $T_i$.

The operation computer 10 may use another method to calculate the distance Dstep. For example, the operation computer 10 may take a maximum angle θhip as the operator 40 making one step forward as shown in Fig. 8(B) and use trigonometric functions to calculate the distance Dstep. According to this method, the computational complexity can be reduced as compared to the method using Formula (1); however, the resolution level is lower than that in the method using Formula (1).

Another configuration is possible. To be specific, the operator 40 or the assistant measures, in advance, a maximum angle θhmx between both legs for the case where the operator 40 actually walks with different step lengths W to determine a relational expression between the step length W and the angle θhmx, namely, W = f(θhmx). In response to the operator 40 walking in place, the operation computer 10 may calculate a maximum value of the angle θhip, substitute the maximum value into θhmx of the expression, and determine the step length W to be the distance Dstep. According to this method, the computational complexity can be reduced as compared to the method using Formula (1); however, the resolution level is lower than that in the method using Formula (1).

The operation computer 10 determines, based on the three-dimensional data 7B, a change in front orientation of the operator 40 in the following manner.

After the initialization, the operation computer 10 keeps monitoring the orientation of the line 40L, namely a line that connects the toe of the right foot 403 and the toe of the left foot 404 in the first space 51. When a change occurs in orientation of the line 40L as shown in Fig. 10, the operation computer 10 calculates an angle θbody of the post-change orientation with respect to the pre-change orientation of the line 40L. This calculates how much the operator 40 changes his/her front orientation.

As described above, the travel information computation module 104 is used to calculate a distance and orientation toward which to shift the robot 3.

When the operator 40 raises the right leg 405 or the left leg 406 to turn, the operation computer 10 erroneously detects the turn as walk-in-place in some cases. To address this, the operator 40 preferably changes his/her orientation with the right foot 403 or the left foot 404 remaining on the floor. Alternatively, the operation computer 10 may be configured not to calculate the distance Dstep when the angle θhip is smaller than a predetermined angle.

In response to the calculation of the distance Dstep or the angle θhip by the travel information computation module 104, the operation computer 10 gives a command to the robot computer 31 by using the travel command module 105 in the following manner.

In response to the calculation of the distance Dstep by the travel information computation module 104, the operation computer 10 sends, to the robot computer 31, a forward command 73 that indicates the distance Dstep as parameters. In response to the calculation of the angle θhip, the operation computer 10 sends, to the robot computer 31, a turn command 74 that indicates the angle 8body as parameters.

The robot computer 31 receives the forward command 73 or the turn command 74 to transfer the same to the robot controller 32.

After the initialization, when receiving the forward command 73 without receiving the turn command 74, the robot controller 32 instructs the mobile driver 34 to move directly forward by the distance Dstep indicated in the forward command 73. Alternatively, after the operator 40 moves forward by one step the last time, when receiving the forward command 73 without receiving the turn command 74, the robot controller 32 instructs the mobile driver 34 to move directly forward by the distance Dstep indicated in the forward command 73.

The mobile driver 34 follows the instruction to control the motor 33 so that the robot 3 moves directly forward by the distance Dstep without changing the direction in which the robot 3 moves as shown in Fig. 11(A).

Alternatively, after the initialization, when receiving the turn command 74 and then receiving the forward command 73, the robot controller 32 instructs the mobile driver 34 to move forward by the distance Dstep indicated in the forward command 73 in the direction of angle 8body indicated in the turn command 74.

The mobile driver 34 follows the instruction to control the orientation of the right wheel 351 and the left wheel 352 and the motor 33 so that the robot 3 moves forward by the distance Dstep in the direction of angle 8body as shown in Fig. 11(B).

While the robot 3 travels, the mobile driver 34 calculates, every predetermined time period Ta, the current position and attitude of the robot 3 in the second space 52. The mobile driver 34 then sends status data 7D indicating the current position and attitude to the robot computer 31.

Every time receiving the status data 7D, the robot computer 31 transfers the same to the operation computer 10.

[Displaying image of virtual space 53]

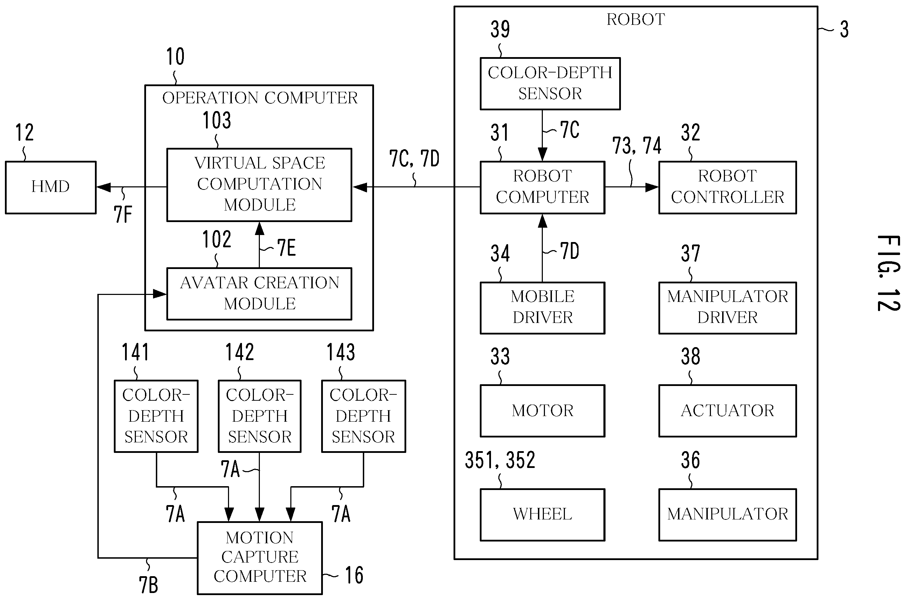

Fig. 12 is a diagram showing an example of the flow of data when an image of the virtual space 53 is displayed.

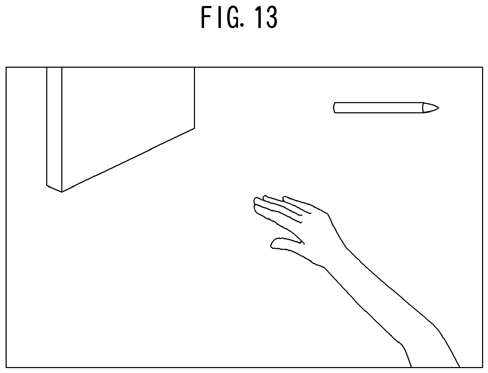

Fig. 13 is a diagram showing an example of an image displayed in the head-mounted display 12.

After the completion of the initialization, processing for displaying an image of the virtual space 53 is performed as described below. The following describes the processing with reference to Fig. 12.

In response to the start command 70 entered, as described above, the color-depth sensors 141-143 start to make an RGBD measurement and the motion capture computer 16 starts to determine a three-dimensional shape.

Even after the completion of the initialization, the color-depth sensors 141-143 continue the RGBD measurement and the motion capture computer 16 continues the determination of the three-dimensional shape. Thereby, the operation computer 10 receives the three-dimensional data 7B from the motion capture computer 16 every predetermined time period Ta.

The operation computer 10 receives the three-dimensional data 7B and uses the avatar creation module 102 to apply processing to the three-dimensional data 7B, so that avatar data 7E on the avatar 41 is created. The processing is, for example, one for smoothing the three-dimensional shape.

Alternatively, the motion capture computer 16 first determines the three-dimensional shape of the operator 40 to generate three-dimensional data 7B and sends the three-dimensional data 7B to the operation computer 10. After that, instead of continuing generating and sending the three-dimensional data 7B, the motion capture computer 16 may inform the operation computer 10 of post-change coordinates of a point subjected to change among the points of the surface of the operator 40.

In such a case, when first being informed the post-change coordinates, the operation computer 10 corrects the three-dimensional data 7B in accordance with the post-change coordinates to create avatar data 7E. After that, in response to the post-change coordinates informed, the operation computer 10 corrects the avatar data 7E in accordance with the post-change coordinates.

As described above, the operation computer 10 receives, from the robot computer 31, the RGBD data 7C every predetermined time period Ta. After the initialization, the operation computer 10 also receives the status data 7D in some cases.

Every time receiving the RGBD data 7C, or, alternatively, in response to the avatar data 7E created or corrected, the operation computer 10 performs the processing as described below by using the virtual space computation module 103.

The operation computer 10 receives the RGBD data 7C and reproduces the second space 52 based on the RGBD data 7C, so that the operation computer 10 calculates a position and attitude of a virtual object in the virtual space 53. This virtualizes the individual objects of the second space 52, e.g., the pen 61 and the panel 62, in the virtual space 53 with the relative relationships of the objects maintained.

Since the position of the robot origin O4 is not the same as the position of the color-depth sensor 39, the operation computer 10 may correct the position and attitude of an object depending on the difference therebetween.

Before the robot 3 starts to travel, in other words, before the status data 7D is received, the operation computer 10 reproduces the second space 52, assuming that the robot 3 is oriented toward the negative direction of the Y2-axis and is present on the origin O2. Once the status data 7D is received, the operation computer 10 reproduces the second space 52, assuming that the robot 3 is present at the position and orientation indicated in the status data 7D. The position and attitude can be calculated by using Kinect technology of Microsoft Corporation.

Alternatively, when the avatar data 7E is created or corrected by the avatar creation module 102, the operation computer 10 places or shifts, based on the avatar data 7E, the avatar 41 in the virtual space 53 according to the current position and orientation of the robot 3 in the second space 52.

The initial position of the avatar 41 corresponds to the origin of the virtual space coordinate system. The virtual space coordinate system is a coordinate system of the virtual space 53. The virtual space coordinate system is a three-dimensional coordinate system in which the direction from the toe of the right foot to the toe of the left foot of the avatar 41 in the initial stage is used as an X3-axis direction, the vertical upward direction is used as a Z3-axis direction, and the direction that is orthogonal to the X3-axis and the Z3-axis and extends from the front to the back of the avatar 41 is used as a Y3-axis direction.

In the case where the avatar 41 has already been placed, the operation computer 10 updates the avatar 41 so that the avatar 41 takes the three-dimensional shape indicated in the avatar data 7E.

Simultaneous Localization And Mapping (SLAM) technology is used to place the avatar 41 in the virtual space 53 and update the avatar 41.

The operation computer 10 detects, with the virtual space computation module 103, positions of both eyes of the avatar 41 in the virtual space 53 every predetermined time period Ta, and determines a line-of-sight direction from the positions of both eyes. Hereinafter, the positions of both eyes of the avatar 41 in the virtual space 53 are referred to as "positions of both eyes". It is possible to detect, as the positions of both eyes, a position of the head-mounted display 12 instead of the both eyes of the avatar 41. The operation computer 10 generates image data 7F that shows an image of an object in the virtual space 53 for the case where the line-of-sight direction is seen from the positions of both eyes. The operation computer 10 then sends the image data 7F to the head-mounted display 12. It can be said that the image shows what appears in the field of view of the operator 40.

Upon receipt of the image data 7F, the head-mounted display 12 displays an image shown in the image data 7F.

According to the foregoing processing, when the operator 40 moves his/her face 401, the positions of both eyes and the line-of-sight direction of the avatar 41 also change along with the movement of the face 401, which results in a change in image showing an object in the virtual space 53. The operator 40 watches images displayed every predetermined time period Ta, which makes the operator 40 feel as if he/she were in the second space 52 or the virtual space 53. The images change every predetermined time period Ta; therefore it can be said that the head-mounted display 12 displays a moving image.

The images displayed are ones which are seen from the positions of both eyes. The images thus do not show the entirety of the avatar 41, instead, show only his/her arm and hand for example, as shown in Fig. 13.

For reduction of occlusion problems, the image of the avatar 41 may be displayed as a translucent image. Alternatively, the image of the avatar 41 may be not displayed when the operator 40 performs no task, in other words, when the operator 40 does not move his/her right hand 402. Yet alternatively, arrangement is possible in which, in response to a command, the image of the avatar 41 is displayed so as to switch between an opaque image, a translucent image, and non-display. In the case where the head-mounted display 12 is a transparent HMD, it is preferable that, in default, no image of the avatar 41 is displayed, and, in response to a command, the image of the avatar 41 is displayed so as to switch between an opaque image, a translucent image, and non-display.

[Movement of hand]

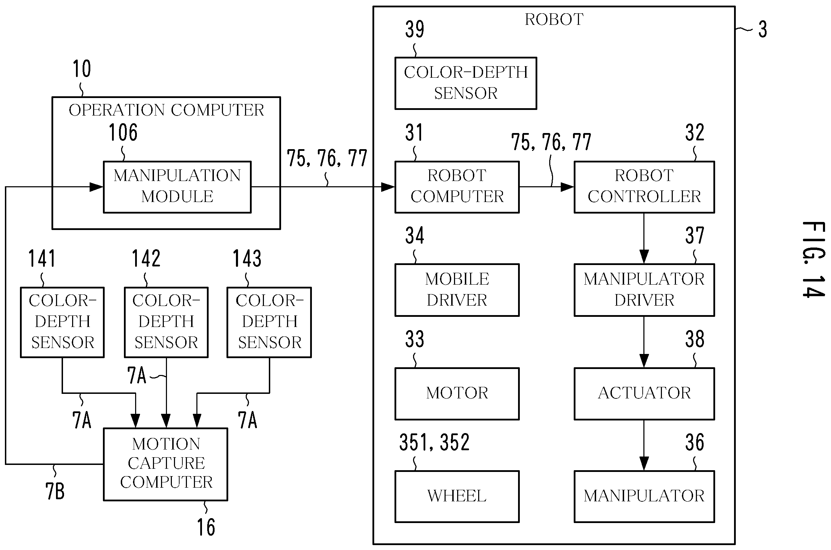

Fig. 14 is a diagram showing an example of the flow of data when a motion of the gripper portion 362 is controlled.

The operator 40 moves his/her right hand 402, which enables the gripper portion 362 to move. The following describes the processing for moving the gripper portion 362 with reference to Fig. 14.

After the initialization, the operation computer 10 performs the processing described below by using the manipulation module 106.

Every time receiving the three-dimensional data 7B, the operation computer 10 calculates a position of the right hand 402 in the operator coordinate system to monitor whether there is a change in position of the right hand 402.

If determining that there is a change in position of the right hand 402, the operation computer 10 sends, to the robot computer 31, a manipulation command 75 which indicates, as parameters, coordinates of the latest position of the right hand 402.

The robot computer 31 receives the manipulation command 75 and transfers the same to the robot controller 32.

The robot controller 32 instructs the manipulator driver 37 to move the gripper portion 362 to a position, in the robot coordinate system, of the coordinates indicated in the manipulation command 75.

The manipulator driver 37 then controls the actuator 38 in such a manner that the gripper portion 362 moves by a moving distance of the right hand.

The processing is performed every time the position of the right hand 402 changes. This enables the gripper portion 362 to move in the same manner as the right hand 402 moves. The arm portion 361 does not necessarily move in the same manner as the right arm of the operator 40 moves.

As described earlier, the shape of the avatar 41 changes in association with the change in three-dimensional shape of the operator 40. Thus, the right hand of the avatar 41 moves as the right hand 402 moves.

Thus, when the operator 40 moves his/her right hand 402, the avatar 41 also moves the right hand of the avatar 41 similarly, and then the robot 3 also moves the gripper portion 362. Stated differently, vectors of the movements of the right hand 402, the right hand of the avatar 41, and the gripper portion 362 match with one another.

When the operator 40 walks in place, or, when the operator 40 turns, the right hand 402 sometimes moves unintentionally even if the operator 40 does not wish the gripper portion 362 to move. In such a case, the gripper portion 362 moves contrary to the intention of the operator 40.

To address this, the operation computer 10 may monitor a change in position of the right hand 402 only when neither the right foot 403 nor the left foot 404 moves.

The operation computer 10 also monitors whether fingers of the right hand 402 open, in addition to change in position of the right hand 402. When detecting that the fingers are closed, the operation computer 10 sends a close command 76 to the robot computer 31. In contrast, when detecting that the fingers open, the operation computer 10 sends an open command 77 to the robot computer 31.

The robot computer 31 receives the close command 76 and transfers the same to the robot controller 32.

The robot controller 32 receives the close command 76 and instructs the manipulator driver 37 to close the gripper portion 362.

The manipulator driver 37 then controls the actuator 38 so that distances between the fingers of the gripper portion 362 are gradually decreased. Another configuration is possible in which a pressure sensor is put on any one of the fingers and movement of the fingers are stopped in response to detection of a certain pressure by the pressure sensor.

The robot computer 31 receives the open command 77 and instructs the manipulator driver 37 to open the gripper portion 362.

The manipulator driver 37 controls the actuator 38 so that the gripper portion 362 is fully open.

The manipulation module 106 can be used to change the position of the gripper portion 362, and open and close the gripper portion 362 according to the movement of the right hand 402.

[Concrete examples as to how to handle object]

The operator 40 searches for the pen 61 and the panel 62 in the virtual space 53 while he/she walks in place, turns, or watches an image displayed in the head-mounted display 12 in the first space 51. When finding out the pen 61 and the panel 62, the operator 40 attempts to move closer to the pen 61 and the panel 62 while he/she walks in place or turns. Along with the motion of the operator 40, the avatar 41 travels in the virtual space 53, and the robot 3 travels in the second space 52.

The operator 40 reaches out his/her right hand 402 when he/she considers that the right hand 402 is likely to reach the pen 61. The operator 40 closes the right hand 402 when he/she watches the image, displayed in the head-mounted display 12, to check that the right hand 402 has reached the pen 61. The avatar 41 then attempts to grip the pen 61. The robot 3 in the second space 52 grabs the pen 61 with the gripper portion 362.

The operator 40 moves the right hand 402 to carry the pen 61 to the surface of the panel 62. When a tip of the pen 61 seems to contact the surface of the panel 62, the operator 40 moves the right hand 402 to draw a circle. A haptic device can be used to give the operator 40 haptic sensation or force sensation. The robot 3 then moves the gripper portion 362 in accordance with the movement of the right hand 402. Thereby, a circle is drawn with the pen 61 on the surface of the panel 62.

The image displayed in the head-mounted display 12 is one seen from the positions of both eyes of the avatar 41. This enables the operator 40 to immerse in the virtual space 53 and feel as if he/she traveled with his/her legs and handled the object with his/her hand without paying attention to the presence of the robot 3.

In this example, a task of drawing a circle with a pen is described. However, the "task" of the present invention includes a complex task such as assembling work or processing work and a simple task such as the one of moving a certain part. The "task" of the present invention also includes a task in which the motion of the robot is invisible, for example, in which the robot 3 takes a picture with a digital camera of the robot 3 in response to a gesture of the operator 40 using the right hand 402 to make a gesture of releasing the shutter.

[Measures against obstacle]

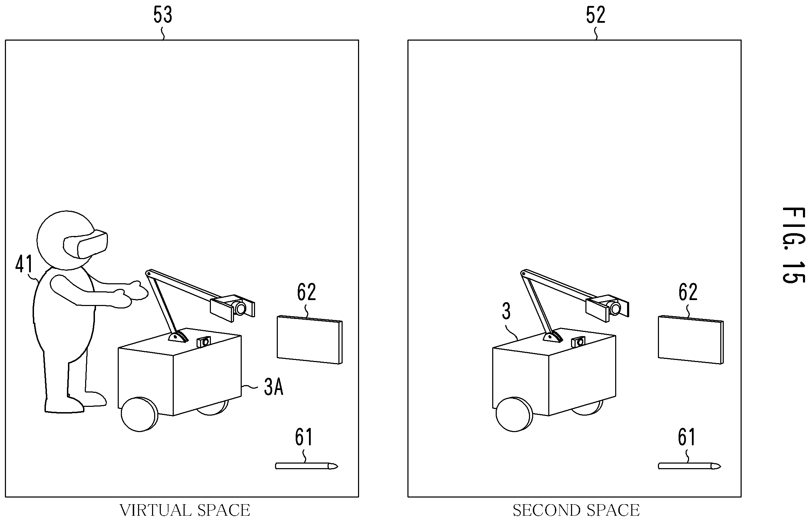

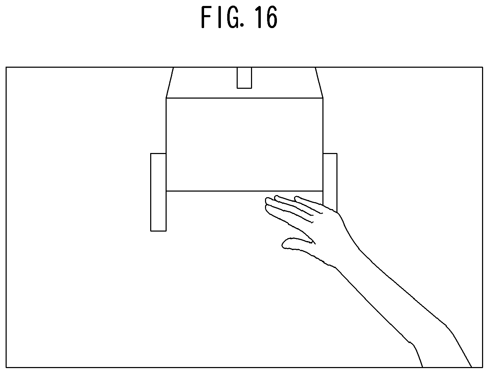

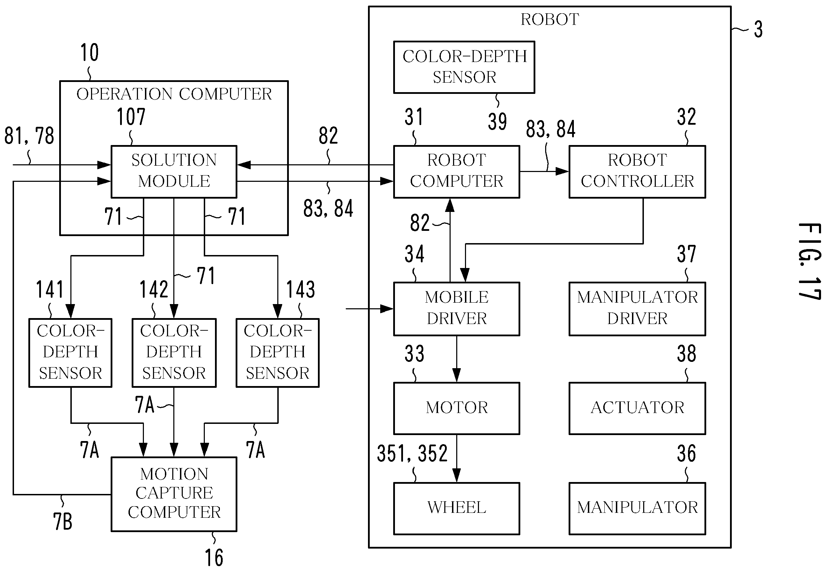

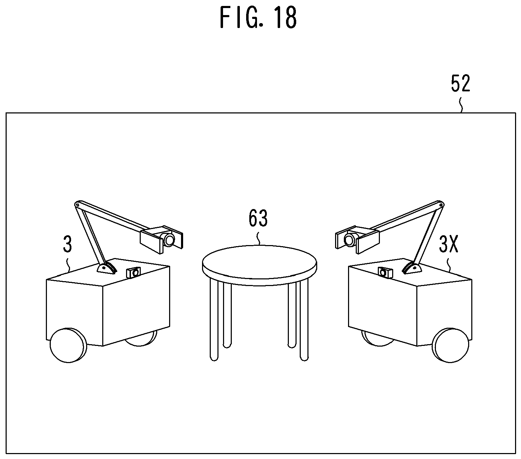

Fig. 15 is a diagram showing an example of placing a virtual robot 3A in the virtual space 53 and shifting the avatar 41 to change the viewpoint of the operator 40 in taking measures against an obstacle. Fig. 16 is a diagram showing an example of an image displayed in the head-mounted display 12. Fig. 17 is a diagram showing an example of the flow of data when measures are taken against an obstacle. Fig. 18 is a diagram showing an example of cooperation between the robot 3 and an assistant robot 3X.

In the meantime, the robot 3 sometimes comes across an obstacle during travelling. The operator 40 and the avatar 41 can straddle the obstacle to go forward. The robot 3 is, however, not capable of moving forward in some cases. This sometimes makes it impossible for the robot 3 to reach the position to which the avatar 41 has travelled.

In such a case, the robot 3 can autonomously detour around the obstacle to travel to the position to which the avatar 41 has travelled.

However, even if using the function of autonomous detour, the robot 3 is sometimes not capable of travelling to the position to which the avatar 41 has travelled. To address this, the solution module 107 is used. The solution module 107 enables the robot 3 to overcome the obstacle or to step back from the obstacle.

In the case where the robot 3 is not capable of travelling to the position to which the avatar 41 has travelled, the robot 3 informs the operation computer 10 of the fact. In response to the information, the head-mounted display 12a displays a message or image information on the fact.

When the operator 40 is informed through the message or the image information that the robot 3 does not move forward even if the operator 40 walks in place, the operator 40 enters a solution command 81.

Another configuration is possible in which the mobile driver 34 is caused to detect the robot 3 not moving forward, even if the robot computer 31 keeps receiving the forward command 73. The mobile driver 34 preferably sends a trouble notice signal 82 to the operation computer 10 via the robot computer 31.

In response to the solution command 81 entered or the trouble notice signal 82 received, the operation computer 10 stops the travel information computation module 104, the travel command module 105, and the manipulation module 106 to disconnect the association between the operator 40, the avatar 41, and the robot 3.

The operation computer 10 uses the virtual space computation module 103 to perform processing for changing the position of an object in the virtual space 53 in the following manner.

Referring to Fig. 15, the operation computer 10 places the virtual robot 3A that is created by virtualizing the three-dimensional shape of the robot 3 at a position of the virtual space 53. The position corresponds to the current position of the robot 3 in the second space 52. The orientation of the virtual robot 3A is also adjusted to be the same as the current orientation of the robot 3.

The operation computer 10 changes a position at which the avatar 41 is to be placed to right behind the virtual robot 3A, by a predetermined distance. For example, the operation computer 10 changes the position, by 20 centimeters backward, from the rear of the virtual robot 3A. The three-dimensional data on the virtual robot 3A is preferably prepared by making a three-dimensional measurement of the robot 3. Alternatively, Computer-aided Design (CAD) data on robot may be used.

When the avatar data 7E is created or corrected with the avatar creation module 102, the operation computer 10 places the avatar 41 not at the current position of the robot 3 but the post-change position thereof.

The operation computer 10 then generates image data 7F on an image showing the environment that is seen from the post-change positions of both eyes of the avatar 41 toward the line-of-sight direction and sends the image data 7F to the head-mounted display 12.

Every time receiving the image data 7F, the head-mounted display 12 displays an image shown in the image data 7F. The head-mounted display 12, however, displays an image showing the environment that is seen from the rear of the virtual robot 3A as shown in Fig. 16 because the position of the avatar 41 is changed.

The operation computer 10 performs, with the solution module 107, processing for controlling the robot 3 to overcome an obstacle or step back from the obstacle. The following describes the processing with reference to Fig. 17.

The operator 40 watches the image to check the surroundings of the robot 3. If the robot 3 is likely to overcome the obstacle, then the operator 40 starts stretching the right hand 402 and the left hand 407 forward in order to push the back of the robot 3.

In the middle of the right hand 402 and the left hand 407 being stretched, the virtual space computation module 103 performs processing, so that the head-mounted display 12 displays an image showing the avatar 41 touching the back of the virtual robot 3A with the right hand and the left hand. The operator 40 continues to further stretch the right hand 402 and the left hand 407.

When detecting that the right hand and the left hand of the avatar 41 has reached the back of the virtual robot 3A, the operation computer 10 sends an output-increase command 83 to the robot computer 31.

The robot computer 31 receives the output-increase command 83 and transfers the same to the robot controller 32.

The robot controller 32 receives the output-increase command 83 and instructs the mobile driver 34 to increase the number of rotations as compared to usual number of rotations.

In response to the instructions, the mobile driver 34 controls the motor 33 so that the right wheel 351 and the left wheel 352 rotate at a speed higher than a normal speed, or, at an acceleration higher than a normal acceleration. This enables the robot 3 to overcome the obstacle in some cases, and does not enable the robot 3 to overcome the obstacle in other cases. In the case where the robot 3 is a crawler robot with flipper, the angle of the flipper is adjusted in accordance with an obstacle, enabling the robot 3 to surmount the obstacle.

Another configuration is possible in which the number of rotations or the acceleration of the right wheel 351 and the left wheel 352 is increased in proportion to the speed at which the right hand 402 and the left hand 407 are stretched. In such a case, the speed is preferably used as parameters and is added to the output-increase command 83. The mobile driver 34 then preferably controls the motor 33 to rotate the right wheel 351 and the left wheel 352 at a number of rotations or acceleration according to the parameters. As with the case of causing the robot 3 to step back described next, a configuration is possible in which the number of rotations or the acceleration of the right wheel 351 and the left wheel 352 is increased according to the speed at which the right hand 402 is bent.

In contrast, if the robot 3 is not likely to overcome the obstacle, or, alternatively, if the robot 3 is not capable of overcoming the obstacle, then the operator 40 starts stretching the right hand 402 forward in order to grab the casing 30 or the manipulator 36 to move the robot 3 backward.

In the middle of the right hand 402 being stretched, the virtual space computation module 103 performs processing, so that the head-mounted display 12 displays an image showing the avatar 41 touching, with the right hand, the casing of the virtual robot 3A or the manipulator. The operator 40 then closes the right hand 402 to grab the casing or the manipulator, and starts bending the right hand 402 to pull the casing or the manipulator toward the operator 40.

In response to the operation by the operator 40, the operation computer 10 sends a backward command 84 to the robot computer 31.

The robot computer 31 receives the backward command 84 and transfers the same to the robot controller 32.

The robot controller 32 receives the backward command 84 and instructs the mobile driver 34 to step back.

In response to the instructions, the mobile driver 34 controls the motor 33 so that the right wheel 351 and the left wheel 352 rotate backward. This causes the robot 3 to step back.

Another configuration is possible in which the operator 40 walks in place or turns, which causes the avatar 41 to go from the back to the front of the virtual robot 3A, and the front of the virtual robot 3A is pushed, and thereby the virtual robot 3A is caused to step back.

When the operator 40 successfully causes the robot 3 to overcome the obstacle or to step back, he/she enters a resume command 78 into the operation computer 10.

Upon receipt of the resume command 78, the operation computer 10 deletes the virtual robot 3A from the virtual space 53 to finish the processing of the solution module 107. The operation computer 10 then performs the initialization processing again with the initialization module 101. After the initialization, the operation computer 10 resumes the avatar creation module 102, the virtual space computation module 103, the travel information computation module 104, the travel command module 105, and the manipulation module 106. This associates the operator 40, the avatar 41, and the robot 3 again with one another, which enables the operator 40 to immerse in the virtual space 53 to resume an intended task. Data on position and attitude of the object in the virtual space 53, calculated through the virtual space computation module 103 before the start of the solution module 107, is preferably reused without being deleted.

In this example, the operation computer 10 controls the motion of the robot 3 by sending, to the robot 3, the output-increase command 83 or the backward command 84 in accordance with the movement of the right hand 402 or the left hand 407.

Instead of this, another arrangement is possible. To be specific, an assistant robot having functions equivalent to those of the robot 3 is placed at a position in the second space 52 corresponding to the position of the avatar 41. The assistant robot is then caused to perform a task of overcoming an obstacle or stepping back from the obstacle. In such a case, the operator 40 and the avatar 41 are preferably associated with the assistant robot instead of the robot 3. The associating processing is described above. The assistant robot finishes its role to leave the robot 3. The operation computer 10 executes the initialization processing again with the initialization module 101.

As described above, the solution module 107 enables the operator 40 to immerse in the virtual space 53 to take measures against an obstacle as if the operator 40 directly touched the robot 3 or the virtual robot 3A.

The operation computer 10 may perform the processing for taking measures against an obstacle in the manner as described above also when a particular event other than finding an obstacle occurs. For example, the operation computer 10 may perform such similar processing when the gripper portion 362 fails to move with the movement of the right hand 402, or when a panel to cover the interior of the casing 30 opens.

The operation computer 10 may shift the avatar 41 to the front, right, or left of the virtual robot 3A rather than the back of the virtual robot 3A.

When the operator 40 makes a motion of bending or stretching a joint of the manipulator 36, the operation computer 10 and the robot controller 32 may instruct the manipulator driver 37 to cause the manipulator 36 to move with the movement of the operator 40.

Even when the robot 3 is not capable of lifting an object with the gripper portion 362, the assistant robot may be caused to appear autonomously to cooperate with the robot 3 to lift the object. Suppose that the operator 40 makes a motion of lifting a chair 63; however, the robot 3 only is not capable of lifting the chair 63. In such a case, the assistant robot 3X may be caused to appear so that the robot 3 and the assistant robot 3X cooperate with each other to lift the chair 63 as shown in Fig. 18. Either the robot computer 31 or the operation computer 10 may be provided with a means for calling the assistant robot 3X.

The robot 3 may perform, as a task, work for assembling or processing independently or in cooperation with the assistant robot 3X.

The assistant robot 3X may have a structure different from that of the robot 3. The assistant robot 3X may be, for example, a drone with arms.

[Entire flow]

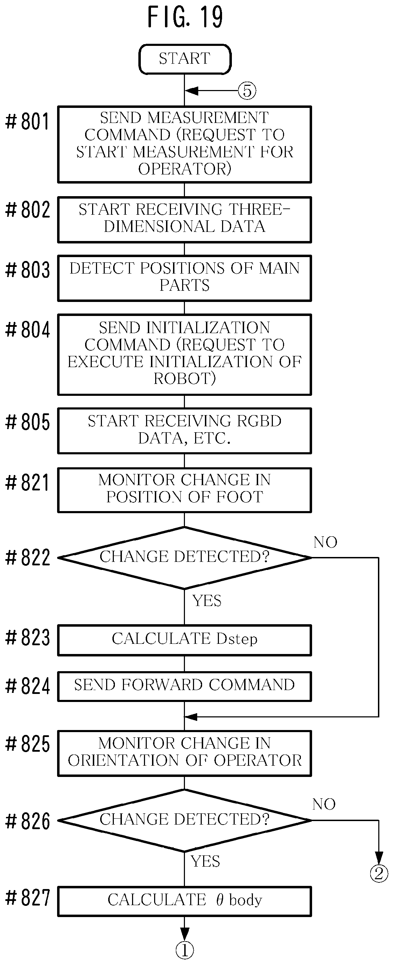

Figs. 19-21 are flowcharts depicting an example of the flow of processing for supporting a task at a remote location.

The description goes on to the flow of the entire processing by the operation computer 10 with reference to the flowcharts.

The operation computer 10 executes the processing based on the task support program 10j in the steps as depicted in Figs. 19-21.

In response to the start command 70 entered, the operation computer 10 performs initialization in the following manner (Steps #801-#805).

The operation computer 10 sends the measurement command 71 to the color-depth sensors 141-143; thereby requests each of the color-depth sensors 141-143 to start an RGBD measurement for the operator 40 (Step #801).

The color-depth sensors 141-143 then start make the RGBD measurement. The motion capture computer 16 determines a three-dimensional shape of the operator 40 based on the measurement results to start sending three-dimensional data 7B showing the three-dimensional shape to the operation computer 10. The operation computer 10 starts receiving the three-dimensional data 7B (Step #802) .

The operation computer 10 starts detecting positions of the right hand 402, the right foot 403, the left foot 404, and so on of the operator 40 based on the three-dimensional data 7B (Step #803).

The operation computer 10 sends the initialization command 72 to the robot 3 (Step #804). The robot 3 then starts an RGBD measurement for the second space 52, and the operation computer 10 starts receiving the RGBD data 7C from the robot 3 (Step #805). After the initialization, the operation computer 10 starts receiving also the status data 7D.

After the completion of the initialization, the operation computer 10 gives a travel-related command to the robot 3 in accordance with the motion of the operator 40 in the following manner (Steps #821-#828).

The operation computer 10 monitors a change in position of the right foot 403 or the left foot 404 (Step #821). Every time detecting a change (Yes in Step #822), the operation computer 10 calculates a distance Dstep (Step #823) to send, to the robot 3, a forward command 73 indicating the distance Dstep as parameters (Step #824).

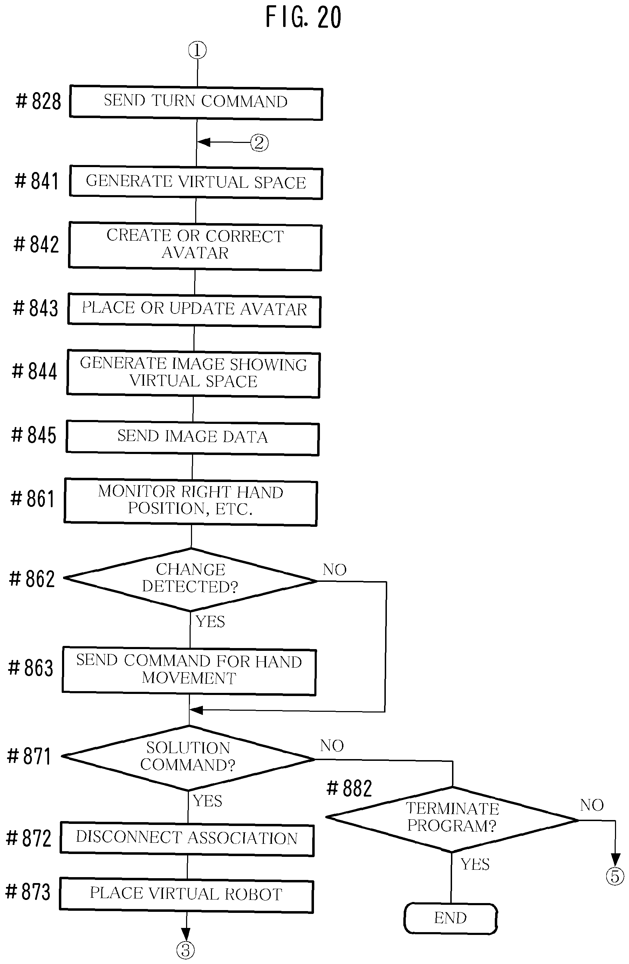

The operation computer 10 monitors a change in orientation of the operator 40 (Step #825). When detecting a change (YES in Step #826), the operation computer 10 calculates an angle θhip (Step #827) to send, to the robot 3, a turn command 74 indicating the angle θhip as parameters (Step #828 of Fig. 20).

The operation computer 10 executes the processing related to the virtual space 53 in the following manner (Steps #841-#845).

The operation computer 10 reproduces the second space 52 based on the RGBD data 7C and the status data 7D to virtualize the virtual space 53 (Step #841). The area to be reproduced widens every time the RGBD data 7C and the status data 7D are obtained.

The operation computer 10 then creates or corrects the avatar 41 based on the three-dimensional data 7B (Step #842). The operation computer 10 places the avatar 41 in the virtual space 53 (Step #843). In the case where the avatar 41 is already placed, the operation computer 10 updates the avatar 41 in conformity with the three-dimensional shape shown in the latest three-dimensional data 7B.

The operation computer 10 generates an image showing the virtual space 53 seen from the positions of both eyes of the avatar 41 (Step #844), and sends image data 7F on the image to the head-mounted display 12 (Step #845). The head-mounted display 12 then displays the image therein.

The operation computer 10 performs processing for moving the gripper portion 362 in the following manner (Steps #861-#863).

The operation computer 10 monitors a change in position of the right hand 402 and opening/closing of the fingers of the right hand 402 (Step #861). When detecting such a change (YES in Step #862), the operation computer 10 sends, to the robot 3, a command according to the change (Step #863). To be specific, when detecting a change in position of the right hand 402, the operation computer 10 sends a manipulation command 75 indicating an amount of change as parameters. When detecting the fingers closing, the operation computer 10 sends a close command 76. When detecting the finger opening, the operation computer 10 sends the open command 77.

The processing of Steps #821-#824, the processing of Steps #825-#828, the processing of Steps #841-#845, and the processing of Steps #861-#863 are performed appropriately in parallel with one another.

In response to a solution command 81 entered or a trouble notice signal 82 sent from the robot 3 (YES in Step #871), the operation computer 10 performs processing for taking measures against an obstacle in the following manner (Steps #872-#881).

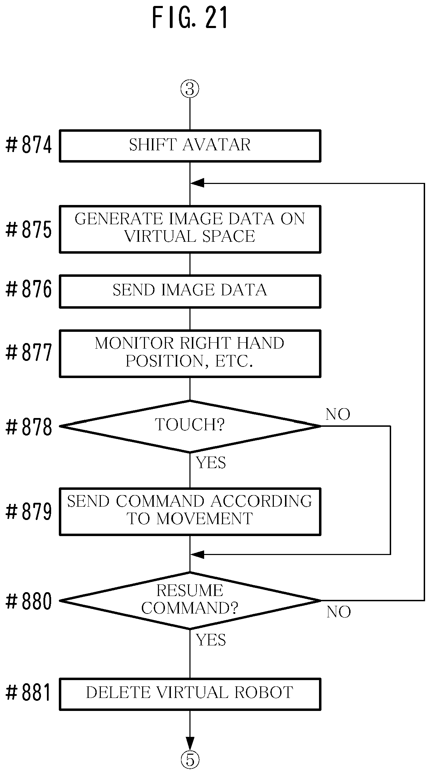

The operation computer 10 disconnects the association between the operator 40, the avatar 41, and the robot 3 (Step #872), and places the virtual robot 3A at a position, in the virtual space 53, corresponding to the current position of the robot 3 in the second space 52 (Step #873). The operation computer 10 also adjusts the orientation of the virtual robot 3A to be the same as the current orientation of the robot 3. The operation computer 10 shifts the avatar 41 in a rear direction of the virtual robot 3A (Step #874 of Fig. 21).

The operation computer 10 generates image data 7F on an image showing the state seen from the post-shift positions of both eyes of the avatar 41 toward the line-of-sight direction (Step #875), and sends the image data 7F to the head-mounted display 12 (Step #876).

The operation computer 10 monitors the position of a part such as the right hand of the avatar 41 (Step #877). When detecting a touch of a part of the avatar 41 on a particular part of the virtual robot 3A (Step #878), the operation computer 10 sends, to the robot 3, a command in accordance with a subsequent movement of the part of the avatar 41 (Step #879).

To be specific, when the right hand and left hand of the avatar 41 touch the back of the virtual robot 3A and are to move in a direction toward which to push the virtual robot 3A, the operation computer 10 sends the output-increase command 83 to the robot 3. Alternatively, when the right hand of the avatar 41 touches the manipulator of the virtual robot 3A and is to move in a direction toward the torso of the avatar 41, the operation computer 10 sends the backward command 84 to the robot 3.

In response to the resume command 78 entered (YES in Step #880), the operation computer 10 deletes the virtual robot 3A from the virtual space 53 (#881), and the process goes back to Step #801 in which the initialization is performed again.

In this embodiment, the operator 40 immerses in the virtual space 53 as if he/she lived through the avatar 41. The operator 40 can perform a task via the robot 3 in the second space 52 without being aware of the presence of the robot 3, which is a structure different from the human body.

In this embodiment, the avatar 41 travels in the virtual space 53 and the robot 3 travels in the second space 52 in accordance with the operator 40 walking in place. Instead of this, however, the avatar 41 and the robot 3 may travel in accordance with the movement of the operator 40 who walks or steps back in the first space 51. In such a case, the individual portions of the remote task execution system 5 perform the processing as described below.

The travel information computation module 104 of the operation computer 10 uses the initial position of the operator 40 as the origin of the first space coordinate system. At the time of the initialization, the X1'-axis, the Y1'-axis, and the Z1'-axis of the first space coordinate system (see Fig. 2) correspond to the X1-axis, the Y1-axis, and the Z1-axis of the operator coordinate system, respectively. When the operator 40 moves, the operator coordinate system also moves with respect to the first space coordinate system.

The travel information computation module 104 calculates coordinates of a position of the operator 40 in the first space coordinate system based on the values obtained by the color-depth sensors 141-143 or the value obtained by the position sensor.

The avatar creation module 102 shifts the avatar 41 to the position, in the virtual space coordinate system, of the coordinates calculated by the travel information computation module 104.

The travel command module 105 instructs the robot 3 to move to the position of the coordinates, of the second virtual space coordinate system, calculated by the travel information computation module 104. The robot 3 then moves following the instructions given by the travel command module 105.

Another arrangement is possible in which a walk-in-place mode and a walk mode are prepared in the operation computer 10. When the walk-in-place mode is selected, the operation computer 10 controls the avatar 41 and the robot 3 to travel in accordance with the walk-in-place. When the walk mode is selected, the operation computer 10 controls the avatar 41 and the robot 3 to travel in accordance with the position of the operator 40 in the first space coordinate system.

[Modification to control target]

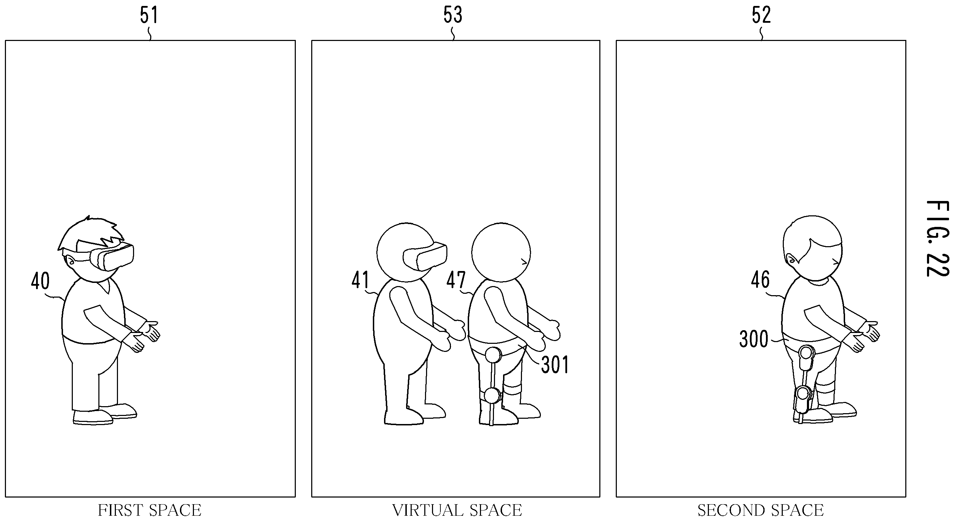

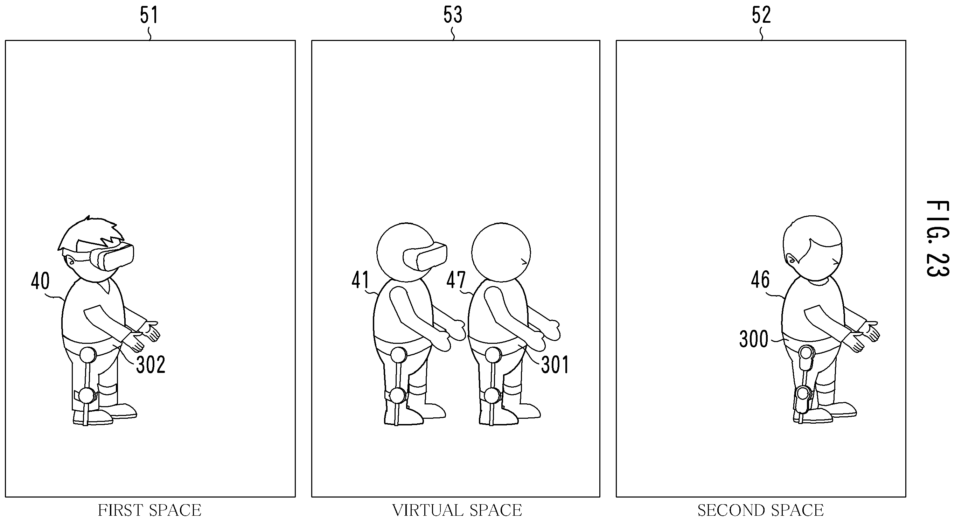

Fig. 22 is a diagram showing an example of the first space 51, the second space 52, and the virtual space 53 for the case where a power assist suit 300 is a control target. Fig. 23 is a diagram showing a second example of the first space 51, the second space 52, and the virtual space 53 for the case where the power assist suit 300 is a control target.

In this embodiment, in the case where the robot 3 comes across an obstacle, the association between the operator 40, the avatar 41, and the robot 3 is disconnected, and the solution module 107 is used to control the robot 3 to overcome the obstacle or step back from the obstacle in accordance with the motion of the operator 40. At this time, the operator 40 can immerse in the virtual space 53 to control the motion of the robot 3 as if he/she directly touched the robot 3 or the virtual robot 3A.

The processing with the solution module 107 may be applied to control a motion of another object of the second space 52. For example, the processing with the solution module 107 may be applied to operate the power assist suit 300.

The following describes the configuration of the individual elements of the remote task execution system 5. The description takes an example in which the power assist suit 300 is a power assist suit for supporting lower limbs, e.g., Hybrid Assistive Limb (HAL) for medical use (lower limb type) or HAL for well-being (lower limb type) provided by CYBERDYNE, INC. In the example, the operator 40, who is a golf expert, teaches a person 46, who is a golf beginner, how to move the lower body for swing in golf. Description of points common to the foregoing configuration shall be omitted.

[Preparation]

Color-depth sensors 39A-39C are placed in the second space 52. The person 46 wears the power assist suit 300 and stands up in the second space 52. The color-depth sensors 39A-39C make RGBD measurements of the person 46 and objects therearound, and send the results of measurements to the operation computer 10.

The operation computer 10 receives the result of measurement from each of the color-depth sensors 39A-39C. The operation computer 10 then reproduces the second space 52 based on the results of measurements with the virtual space computation module 103; thereby virtualizes the virtual space 53. Thereby, an avatar 47, wearing the power assist suit 300, of the person 46 appears in the virtual space 53. The power assist suit 300 in the virtual space 53 is hereinafter referred to as a "virtual power assist suit 301".

The operation computer 10 creates the avatar 41 with the avatar creation module 102, and places the avatar 41 at a position, by a predetermined distance, away from the back of the avatar 47 in the virtual space 53 with the virtual space computation module 103. The operation computer 10 places the avatar 41 at a position, for example, 50 centimeters away from the back of the avatar 47 in the virtual space 53.

Alternatively, three-dimensional data on the virtual power assist suit 301 may be prepared in advance by a three-dimensional measurement of the power assist suit 300. The three-dimensional data may be used to be placed in the virtual power assist suit 301.

After the avatar 41 and the avatar 47 are placed in the virtual space 53, the operation computer 10 generates image data 7F on an image of the virtual space 53 seen from the positions of both eyes of the avatar 41 in the line-of-sight direction, and sends the image data 7F to the head-mounted display 12. The head-mounted display 12 displays an image based on the image data 7F. This enables the operator 40 to feel as if he/she were behind the person 46.

Common power assist suits operate in accordance with a potential signal of a living body. The power assist suit 300, however, has a wireless LAN device and is so configured as to operate in accordance with a command sent from the operation computer 10 instead of a potential signal of a living body.

[Control on power assist suit 300]

The operator 40 can operate the power assist suit 300 as if he/she touched the virtual power assist suit 301.

When the person 46 swings, the head-mounted display 12 displays an image of the avatar 47 swinging.

The operator 40 watches the image to check the form of the person 46. If any problem is found in movement of the lower body of the person 46, then the operator 40 asks the person 46 to swing slowly. At this time, the operator 40 moves his/her right hand 402 and left hand 407 to instruct the person 46 how to move the lower body as if the operator 40 directly touched and moved the power assist suit 300.

When detecting a contact between the right hand and the left hand of the avatar 41 and the virtual power assist suit 301 in the virtual space 53, the operation computer 10 sends, to the power assist suit 300, a motion command 86 that indicates further movements of the right hand 402 and the left hand 407 as parameters. The detection of such a contact and the transmission of the motion command 86 are preferably performed, for example, with the manipulate module 106. Alternatively, another module different from the manipulate command module 106 may be prepared to perform the detection and the transmission.

The power assist suit 300 receives the motion command 86 and operates in the same manner as that indicated in the motion command 86.

For example, when finding a problem that the right knee of the person 46 is straight, the operator 40 moves the right hand 402 and the left hand 407 as if he/she bent the right knee of the person 46 while grabbing the right knee or a part therearound of the virtual power assist suit 301. The operation computer 10 then sends the motion command 86 indicating the movement as parameters to the power assist suit 300. The power assist suit 300 then operates in the same manner as that indicated in the motion command 86.

When finding a problem in the way of twisting the waist of the person 46, the operator 40 moves the right hand 402 and the left hand 407 as if he/she twisted the waist of the person 46 appropriately while holding the waist of the virtual power assist suit 301. The operation computer 10 then sends the motion command 86 indicating the movement as parameters to the power assist suit 300. The power assist suit 300 then operates in the same manner as the movement indicated in the motion command 86.

The foregoing control on the power assist suit 300 is merely one example. In another example, an experiment may be conducted in advance to determine how and which part of the power assist suit 300 is moved with both hands generate what kind of potential signal. Then, data indicating a relationship between movements of both hands, the part of the power assist suit 300, and the potential signal may be registered into a database.

After both hands of the avatar 41 contact the virtual power assist suit 301, the operation computer 10 may calculate a potential signal based on the contact part, the movement of each of the right hand 402 and the left hand 407, and data thereon, and may inform the potential signal to the power assist suit 300. The power assist suit 300 operates based on the informed potential signal.

Application of the technology of this embodiment to the power assist suit 300 enables the operator 40, who is in a place away from the person 46, to instruct the person 46 on form in real time more safely than is conventionally possible.

The power assist suit 300 may be a power assist suit for supporting the upper body. This modification may be applied to convey a technique other than the golf swing technique. The modification is also applicable to inheritance of master craftsmanship such as pottery, architecture, or sculpture, or to inheritance of traditional arts such as dance, drama, or calligraphic works.

This modification is also applicable to a machine other than the power assist suit 300. The modification is applicable, for example, to a vehicle having autonomous driving functions.

Alternatively, the operator 40 may wear a power assist suit 302 as shown in Fig. 23. The power assist suit 302 detects the motion of the operator 40 to inform the power assist suit 300 of the detection. The power assist suit 300 then operates in accordance with the motion of the operator 40. Alternatively, the power assist suit 300 may detect a motion of a person 46 to inform the power assist suit 302 of the same. In such a case, the power assist suit 302 operates in accordance with the motion of the person 46. In this way, the operator 40 feels the motion of the person 46, so that the operator 40 can judge a habit of motion of the person 46 or what is good/bad of the motion of the person 46.

[Other modifications]

In this embodiment, the initialization module 101 through the solution module 107 (see Fig. 4) are software modules. Instead of this, however, the whole or a part of the modules may be hardware modules.

In this embodiment, the color-depth sensors 14 measure the three-dimensional shape of the operator 40 and the motion capture computer 16 determines an RGBD of the operator 40. Instead of this, however, a three-dimensional measurement device may be used to make such measurements and determinations.

In this embodiment, the case is described in which the gripper portion 362 grips the pen 61. However, when the gripper portion 362 attempts to grip an object heavier than an acceptable weight of the gripper portion 362, the operator 40 cannot handle that object as he/she expects. To address this, the robot 3 may let an auxiliary robot come to the robot 3 so that the robot 3 may lift or move the object in cooperation with the auxiliary robot.

In this embodiment, the operator 40 inputs the solution command 81 when the robot 3 does not move forward as the operator 40 expects. Instead of this, the operator 40 may input the solution command 81 anytime. For example, the operator 40 may input the solution command 81 when he/she intends to check the state of the robot 3. This enables the operator 40 to easily check the wheels 35, the manipulator 36, and so on. The components are difficult for the operator 40 to check when he/she and the avatar 41 are associated with the robot 3.

In this embodiment, in the case where the operator 40 and the avatar 41 are associated with the robot 3, the operation computer 10 does not place the virtual robot 3A in the virtual space 53. Instead of this, however, in the case where a user enters a place command to check the state of the robot 3, the operation computer 10 may place the virtual robot 3A temporarily or until a cancel command is entered. This enables the operator 40 to check whether the right hand 402 and the gripper portion 362 cooperate with each other properly. The operator 40 thereby can perform a task while always monitoring the actual motion of the robot 3.

In this embodiment, the operator 40 is informed of the state of the second space 52 through images of the virtual space 53. The operator 40 may be informed of the state of the second space 52 through another means.

For example, in the case where the robot 3 interferes with an object such as contacting an obstacle, the speaker 10g of the operation computer 10 may output a contact sound. The contact with the obstacle may be detected through a sensor of the robot 3. The contact with the obstacle may be detected based on a position of the robot 3 and a position of an object calculated by the virtual space computation module 103. The contact sound may be sound that is recorded or synthesized in advance. The contact sound may be collected by a microphone, equipped in the robot 3, when the robot 3 actually contacts the obstacle. The color-depth sensors 14 or the liquid crystal display 10f may display a message indicating the contact with the obstacle. The color-depth sensors 14 may display how the obstacle is broken.

The gripper portion 362 may have a force sensor in fingers thereof so that the force sensor measures a force or moment when the gripper portion 362 grips an object. Alternatively, the gripper portion 362 may have a tactile sensor so that the tactile sensor detects a smooth surface or a rough surface of the object. The operation computer 10 displays the result of measurement or detection in the head-mounted display 12 or the liquid crystal display 10f. Yet alternatively, the operator 40 may wear a haptic glove on his/her right hand 402. The operator 40 may be informed of the sense of holding the object via the haptic glove based on the result of measurement or detection. The haptic glove may be Dexmo provided by Dexta Robotics Inc. or Senso Glove developed by Senso Devices Inc.

In this embodiment, the case is described in which the robot 3 is used to draw a picture with the pen 61 in the panel 62. The robot 3 may be used in a disaster site, accident site, or outer space.

The avatar 41 moves immediately along with the motion of the operator 40; however, the avatar 41 and the robot 3 sometimes move asynchronously. For example, in the case where the robot 3 is placed on the moon surface and the operator 40 works on the earth, the robot 3 moves on the moon surface after the time necessary for a command to be received elapses. In the case where the motion speed of the robot 3 is lower than that of the avatar 41, the operator 40 or the avatar 41 moves, and after that, the robot 3 moves. Suppose that the travel speed of the robot 3 is lower than that of the operator 40. In such a case, when the operator 40 moves to lift a chair, the robot 3 is supposed to lift a chair by an amount of time late which corresponds to the time for the robot 3 to move. In such a case, the motion of the operator 40 is logged, and the robot 3 is controlled based on the log.

Alternatively, movement is made so as not to delay in the virtual space, the motion of the robot 3 is simulated by a physical simulator, and then the result of simulation is used to synchronize and move the operator 40 and the avatar 41 in the virtual space. Data indicating the motion of the avatar 41 is stored in a memory and the data is sent to the robot 3 successively. In the case where the robot 3 in the simulator or the robot 3 in the actual space fails to work, the operator 40 is informed of the fact, the data in the memory is used to return the state of the avatar 41 to the state immediately before the work failure and restore the situation of the virtual space, and then to start the recovery operation.

In this embodiment, the case is described in which the robot 3 is provided with the two wheels 35 as a travel means. Instead of this, the robot 3 may be provided with four or six wheels 35. Alternatively, the robot 3 may be provided with a caterpillar. Alternatively, the robot 3 may be provided with a screw on the bottom thereof, which enables the robot 3 to travel on or under water. Yet alternatively, a variety of robots may be prepared to be used selectively depending on the situations of a disaster site or an accident site.

In this embodiment, the gripper portion 362 of the robot 3 is caused to move with the movement of the right hand 402 of the operator 40. The following arrangement is also possible: in the case where the robot 3 has two manipulators 36, the gripper portion 362 of a right manipulator 36 is caused to move with the right hand 402 of the operator 40, and the gripper portion 362 of a left manipulator 36 is caused to move with the left hand 407 of the gripper portion 362.

In the case where the robot 3 has a right foot and a left foot, the right foot and the left foot of the robot may be caused to move with the right foot 403 and the left foot of the operator 40, respectively.

In this embodiment, the avatar 41 is placed in the virtual space 53 without being enlarged or reduced. Instead of this, the avatar 41 which has been enlarged or reduced may be placed in the virtual space 53. For example, if the robot 3 has a size similar to that of a small animal such as a rat, the avatar 41 may be reduced to correspond to the size of the rat and be placed. After that, the avatar 41 and the robot 3 may be caused to move by a distance corresponding to a ratio of the size of the avatar 41 to the size of the operator 40 in the movement of the operator 40. Alternatively, the scale of the motion of the avatar 41 and the robot 3 may be changed depending on the ratio with the size of the avatar 41 remaining unchanged.

In this embodiment, the robot 3 detects an object in the second space 52 based on the RGBD data 7C obtained by the color-depth sensor 39, and the like. Another arrangement is possible in which each of the objects is given an Integrated Circuit (IC) tag having records of a position, three-dimensional shape, and characteristics of the corresponding object. The robot 3 may detect an object by reading out such information from the IC tag.

[Example of experimental results]

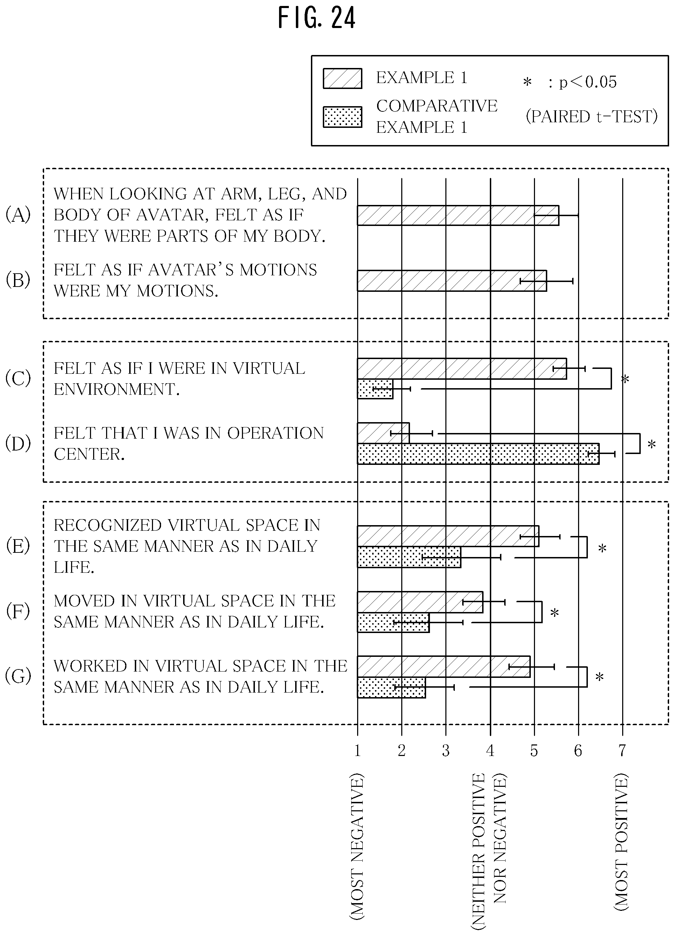

Fig. 24 is a diagram showing an example of experimental results.

The description goes on to an example of an experiment conducted with the remote task execution system 5. In the panel 62, a belt-like circle having an outer diameter of 400 millimeters and an inner diameter of 300 millimeters is drawn in advance. The distance between the circle center and the floor is approximately 0.6 meters. The task in this experiment is to shift the robot 3 from a position approximately 1.7 meters away from the panel 62 to the panel 62, and to control the robot 3 to draw a circle with the pen 61. In this experiment, the gripper portion 362 already grips the pen 61. The operator 40 wears, in advance, the head-mounted display 12.

The operator 40 walks in place to cause the robot 3 to move closer to the panel 62. When considering that the right hand 402 seems to reach the panel 62, the operator 40 applies the pen 61 to the panel 62 and moves the right hand 402 so as to trace the circle drawn in advance. In this embodiment, when the robot 3 approaches the panel 62, the virtual robot 3A is placed in the virtual space 53, which makes it easier for the operator 40 to find a position of a grip portion of the virtual robot 3A.

In order to compare with the subject experiment, the following experiment was conducted. The virtual robot 3A rather than the avatar 41 was placed in the virtual space 53, and an image showing the virtual space 53 was displayed in an ordinary liquid crystal display of 23 inches instead of the head-mounted display 12. Further, the person experimented, namely, the operator 40, used a game controller having a stick and a button to operate the robot 3 while looking at the image. In the comparative experiment, the operator 40 was allowed to use the mouse to change freely the image displayed, namely, change the viewpoint from which the virtual space 53 is looked at, anytime. The operator 40 then uses the pen 61 to trace the circle drawn in advance by the game controller.

The result shown in Fig. 24 was obtained in the subject experiment and the comparative experiment. Each of asterisks shown in Fig. 24 indicates a significant difference between the subject experiment and the comparative experiment in the case where paired two-tailed t-test was conducted with level of significance $\square\square$ equal to 0.05.

The results of (A) and (B) of Fig. 24 show that the operator 40 feels as if the avatar 41 were the body of the operator 40. The results of (C) and (D) of Fig. 24 show that the operator 40 feels as if he/she were in the virtual space 53 in the case of the subject experiment rather than the comparative experiment. The results of (E), (F), and (G) of Fig. 24 show that the operator 40 feels the same as usual more in the subject experiment than in the comparative experiment.

**Industrial Applicability**

The present invention is used in a situation where an operator performs a task or teaches a beginner of a skill of an expert at a remote location through a machine such as a robot.

**Reference Signs List**

5 remote task execution system (robot control system, machine control system)
10a CPU
10b RAM
10h speaker (informing portion)
103 virtual space computation module (display unit)
104 travel information computation module (second control unit)
105 travel command module (second control unit)
106 manipulate command module (control unit)
107 solution module (third control unit)
12 head-mounted display (display)
3 robot
3A virtual robot
362 gripper portion (first part)
300 power assist suit (machine)
40 operator
402 right hand (second part)
41 avatar
52 second space (space)
53 virtual space
61 pen (object)
63 chair (object)

**Claims**

1. A robot control system for controlling a robot to perform a task while an image displayed in a display is shown to an operator, the robot control system comprising:

   a display means configured to display, in the display, a field of view image that shows what appears in a field of view of the operator if the operator is present in a space where the robot is present; and
   a control means configured to generate a control instruction to cause the robot to perform a task in accordance with a motion of the operator, and to send the control instruction to the robot.

2. The robot control system according to claim 1, wherein
   the robot includes a first part to handle an object,
   the operator has a second part, and
   the control means generates, as the control instruction, an instruction to move the first part in accordance with a movement of the second part, and sends the control instruction to the robot.

3. The robot control system according to claim 2, wherein, when the operator moves the second part, the control means controls the robot so that the first part moves in accordance with a movement path of the second part in the space if the operator is present in the space.

4. The robot control system according to claim 2 or 3, wherein
   the display is a head-mounted display to be worn by the operator, and
   the display means places an avatar that moves in accordance with a motion of the operator in a virtual space created by virtually reproducing the space, and displays, as the field of view image, an image showing what is seen in a line-of-sight direction from an eye of the avatar in the display.

5. The robot control system according to claim 4, wherein the display means places the avatar in the virtual space by using a three-dimensional shape determined through a measurement of the operator and a three-dimensional shape determined based on data obtained by a measurement device provided in the robot.

6. The robot control system according to claim 4 or 5, comprising a second control means configured to shift the robot in accordance with the operator walking in place, wherein
the display means places the avatar in a position at which the robot is to be reproduced in the virtual space, and displays the field of view image in the display.

7. The robot control system according to claim 6, wherein the display means places a virtual robot created by virtualizing the robot at the position in the virtual space, and displays the field of view image in the display.

8. The robot control system according to claim 6, wherein, when a specific command is entered, or, alternatively, when a specific event occurs in the robot, the display means places a virtual robot created by virtualizing the robot at the position in the virtual space, places again the avatar near the position, and displays the field of view image in the display.

9. The robot control system according to claim 8, comprising a third control means configured to, in response to a motion of the operator after the avatar is placed again, control the robot so that the motion causes a change in the robot if a positional relationship between the operator and the robot corresponds to a positional relationship between the avatar and the virtual robot.

10. The robot control system according to any one of claims 2 through 9, comprising an informing means configured to inform the operator, when the robot touches the object or interferes with an obstacle in the space, of the touch on the object or the interference with the obstacle by giving the operator force sensation, haptic sensation, or hearing sense.

11. The robot control system according to any one of claims 2 through 10, comprising a cooperation means configured to, when the first part is incapable of handling the object as the operator desires to handle, perform processing for handling the object in cooperation with another robot.

12. The robot control system according to any one of claims 4 through 9, wherein the display means displays the field of view image in the display while the avatar is moved to perform a task in accordance with a motion of the operator.

13. A machine control system for controlling a machine; the machine control system comprising:

a display means configured to display, in a display, a field of view image that shows what appears in a field of view of an operator if the operator is at a position near the machine in a space where the machine is present; and
a control means configured to, in response to a motion of the operator, control the machine so that the motion causes a change in the machine if the operator is present at the position of the space.

14. The machine control system according to claim 13, wherein
the display is a head-mounted display to be worn by the operator, and
the machine is a power assist suit.

15. A robot control method for controlling a robot to perform a task while an image displayed in a display is shown to an operator, the robot control method comprising:

performing display processing for displaying, in the display, a field of view image that shows what appears in a field of view of the operator if the operator is present in a space where the robot is present; and
performing control processing for generating a control instruction to cause the robot to perform a task in accordance with a motion of the operator, and for sending the control instruction to the robot.

16. The robot control method according to claim 15, wherein
the robot includes a first part to handle an object,
the operator has a second part, and
the control processing is to generate, as the control instruction, an instruction to move the first part in accordance with a movement of the second part, and to send the control instruction to the robot.

17. The robot control method according to claim 16, wherein, when the operator moves the second part, the control processing is to control the robot so that the first part moves in accordance with a movement path of the second part in the space if the operator is present in the space.

**18.** The robot control method according to claim 16 or 17, wherein
the display is a head-mounted display to be worn by the operator, and
the display processing is to place an avatar that moves in accordance with a motion of the operator in a virtual space created by virtually reproducing the space, and to display, as the field of view image, an image showing what is seen in a line-of-sight direction from an eye of the avatar in the display.

**19.** The robot control method according to claim 18, wherein the display processing is to place the avatar in the virtual space by using a three-dimensional shape determined through a measurement of the operator and a three-dimensional shape determined based on data obtained by a measurement device provided in the robot, and to display the field of view image in the display.

**20.** The robot control method according to claim 18 or 19, comprising performing second control processing for shifting the robot in accordance with the operator walking in place, wherein
the display processing is to place the avatar in a position at which the robot is to be reproduced in the virtual space, and to display the field of view image in the display.

**21.** The robot control method according to claim 20, wherein the display processing is to place a virtual robot created by virtualizing the robot at the position in the virtual space, and to display the field of view image in the display.

**22.** The robot control method according to claim 20, wherein, when a specific command is entered, or, alternatively, when a specific event occurs in the robot, the display processing is to place a virtual robot created by virtualizing the robot at the position in the virtual space, to place again the avatar near the position, and to display the field of view image in the display.

**23.** The robot control method according to claim 22, comprising performing third control processing for, in response to a motion of the operator after the avatar is placed again, controlling the robot so that the motion causes a change in the robot if a positional relationship between the operator and the robot corresponds to a positional relationship between the avatar and the virtual robot.

**24.** The robot control method according to any one of claims 16 through 23, comprising performing informing processing for informing the operator, when the robot touches the object or interferes with an obstacle in the space, of the touch on the object or the interference with the obstacle by giving the operator force sensation, haptic sensation, or hearing sense.

**25.** The robot control method according to any one of claims 16 through 24, comprising performing cooperation processing for, when the first part is incapable of handling the object as the operator desires to handle, handling the object in cooperation with another robot.

**26.** The robot control method according to any one of claims 18 through 23, wherein the display processing is to display the field of view image in the display while the avatar is moved to perform a task in accordance with a motion of the operator.

**27.** A machine control method for controlling a machine; the machine control method comprising:

performing display processing for displaying, in a display, a field of view image that shows what appears in a field of view of an operator if the operator is at a position near the machine in a space where the machine is present; and
performing control processing for controlling, in response to a motion of the operator, the machine so that the motion causes a change in the machine if the operator is present at the position of the space.

**28.** The machine control method according to claim 27, wherein
the display is a head-mounted display to be worn by the operator, and
the machine is a power assist suit.

**29.** A non-transitory recording medium storing a computer readable program used in a computer for controlling a robot to perform a task while an image displayed in a display is shown to an operator, the computer readable program causing the computer to perform processing comprising:

display processing for displaying, in the display, a field of view image that shows what appears in a field of view of the operator if the operator is present in a space where the robot is present; and

control processing for generating a control instruction to cause the robot to perform a task in accordance with a motion of the operator, and for sending the control instruction to the robot.

30. The non-transitory recording medium according to claim 29, wherein
the robot includes a first part to handle an object,
the operator has a second part, and
the control processing is to generate, as the control instruction, an instruction to move the first part in accordance with a movement of the second part, and to send the control instruction to the robot.

31. The non-transitory recording medium according to claim 30, wherein, when the operator moves the second part, the control processing is to control the robot so that the first part moves in accordance with a movement path of the second part in the space if the operator is present in the space.

32. The non-transitory recording medium according to claim 30 or 31, wherein
the display is a head-mounted display to be worn by the operator, and
the display processing is to place an avatar that moves in accordance with a motion of the operator in a virtual space created by virtually reproducing the space, and to display, as the field of view image, an image showing what is seen in a line-of-sight direction from an eye of the avatar in the display.

33. The non-transitory recording medium according to claim 32, wherein the display processing is to place the avatar in the virtual space by using a three-dimensional shape determined through a measurement of the operator and a three-dimensional shape determined based on data obtained by a measurement device provided in the robot, and to display the field of view image in the display.

34. The non-transitory recording medium according to claim 32 or 33, wherein
the computer readable program causes the computer to perform second control processing for shifting the robot in accordance with the operator walking in place, and
the display processing is to place the avatar in a position at which the robot is to be reproduced in the virtual space, and to display the field of view image in the display.

35. The non-transitory recording medium according to claim 34, wherein the display processing is to place a virtual robot created by virtualizing the robot at the position in the virtual space, and to display the field of view image in the display.

36. The non-transitory recording medium according to claim 34, wherein, when a specific command is entered, or, alternatively, when a specific event occurs in the robot, the display processing is to place a virtual robot created by virtualizing the robot at the position in the virtual space, to place again the avatar near the position, and to display the field of view image in the display.

37. The non-transitory recording medium according to claim 36, wherein the computer readable program causes the computer to perform third control processing for, in response to a motion of the operator after the avatar is placed again, controlling the robot so that the motion causes a change in the robot if a positional relationship between the operator and the robot corresponds to a positional relationship between the avatar and the virtual robot.

38. The non-transitory recording medium according to any one of claims 30 through 37, wherein the computer readable program causes the computer to perform informing processing for informing the operator, when the robot touches the object or interferes with an obstacle in the space, of the touch on the object or the interference with the obstacle by giving the operator force sensation, haptic sensation, or hearing sense.

39. The non-transitory recording medium according to any one of claims 30 through 38, wherein the computer readable program causes the computer to perform cooperation processing for, when the first part is incapable of handling the object as the operator desires to handle, handling the object in cooperation with another robot.

40. The non-transitory recording medium according to any one of claims 32 through 37, wherein the display processing is to display the field of view image in the display while the avatar is moved to perform a task in accordance with a motion of the operator.

41. A non-transitory recording medium storing a computer readable program used in a computer for controlling a machine, the computer readable program causing the computer to perform processing comprising:

display processing for displaying, in a display, a field of view image that shows what appears in a field of view of an operator if the operator is at a position near the machine in a space where the machine is present; and control processing for controlling, in response to a motion of the operator, the machine so that the motion causes a change in the machine if the operator is present at the position of the space.

42. The non-transitory recording medium according to claim 41, wherein the display is a head-mounted display to be worn by the operator, and the machine is a power assist suit.

FIG. 1

# FIG. 2

# FIG. 3

# FIG. 4

**101**

| INITIALIZATION MODULE | ~ 10j |

**102**

AVATAR CREATION MODULE

**103**

VIRTUAL SPACE COMPUTATION MODULE

**104**

TRAVEL INFORMATION COMPUTATION MODULE

**105**

TRAVEL COMMAND MODULE

**106**

MANIPULATION MODULE

**107**

SOLUTION MODULE

# FIG. 5

FIG. 6

# FIG. 7

FIG. 8

(A)

(B)

FIG. 9

EP 3 547 267 A1

# FIG. 10

51 ~

40L

404 ~        ~ 403

40

→

TURN

51 ~

~ 403

θ body

404 ~

40

# FIG. 11

(A)

~ Dstep

3

(B)

θ body

Dstep ~

3

# FIG. 12

# FIG. 13

# FIG. 14

# FIG. 15

SECOND SPACE

VIRTUAL SPACE

# FIG. 16

# FIG. 17

FIG. 18

# FIG. 19

START

⑤

#801 SEND MEASUREMENT COMMAND (REQUEST TO START MEASUREMENT FOR OPERATOR)

#802 START RECEIVING THREE-DIMENSIONAL DATA

#803 DETECT POSITIONS OF MAIN PARTS

#804 SEND INITIALIZATION COMMAND (REQUEST TO EXECUTE INITIALIZATION OF ROBOT)

#805 START RECEIVING RGBD DATA, ETC.

#821 MONITOR CHANGE IN POSITION OF FOOT

#822 CHANGE DETECTED? NO

YES

#823 CALCULATE Dstep

#824 SEND FORWARD COMMAND

#825 MONITOR CHANGE IN ORIENTATION OF OPERATOR

#826 CHANGE DETECTED? NO

YES ②

#827 CALCULATE $\theta$ body

①

# F I G. 20

①

#828 | SEND TURN COMMAND

② →

#841 | GENERATE VIRTUAL SPACE

#842 | CREATE OR CORRECT AVATAR

#843 | PLACE OR UPDATE AVATAR

#844 | GENERATE IMAGE SHOWING VIRTUAL SPACE

#845 | SEND IMAGE DATA

#861 | MONITOR RIGHT HAND POSITION, ETC.

#862 | CHANGE DETECTED? — NO

YES

#863 | SEND COMMAND FOR HAND MOVEMENT

#871 | SOLUTION COMMAND? — NO

YES

#882 | TERMINATE PROGRAM? — NO

#872 | DISCONNECT ASSOCIATION

YES

#873 | PLACE VIRTUAL ROBOT

END

③

⑤

# FIG. 21

③

#874 | SHIFT AVATAR

#875 | GENERATE IMAGE DATA ON VIRTUAL SPACE

#876 | SEND IMAGE DATA

#877 | MONITOR RIGHT HAND POSITION, ETC.

#878 | TOUCH? — NO

YES

#879 | SEND COMMAND ACCORDING TO MOVEMENT

#880 | RESUME COMMAND? — NO

YES

#881 | DELETE VIRTUAL ROBOT

⑤

# FIG. 22

# FIG. 23

# FIG. 24

## INTERNATIONAL SEARCH REPORT

| International application No. |
| --- |
| PCT/JP2017/042155 |

**A.  CLASSIFICATION OF SUBJECT MATTER**

Int. Cl.  G06T19/00(2011.01)i, B25J9/22(2006.01)i

According to International Patent Classification (IPC) or to both national classification and IPC

**B.  FIELDS SEARCHED**

Minimum documentation searched (classification system followed by classification symbols)

Int. Cl.  G06T19/00-19/20, B25J9/00-9/22, G06F3/01, G06F3/048-3/0489

Documentation searched other than minimum documentation to the extent that such documents are included in the fields searched

Published examined utility model applications of Japan       1922-1996
Published unexamined utility model applications of Japan     1971-2018
Registered utility model specifications of Japan             1996-2018
Published registered utility model applications of Japan     1994-2018

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X<br><br>Y<br><br>A | FERNANDO, C. L. et al., Design of TELESAR V for Transferring Bodily Consciousness in Telexistence, 2012 IEEE/RSJ International Conference on Intelligent Robots and Systems, 2012, pp. 5112-5118 | 1-3, 10, 13, 15-17, 24, 27, 29-31, 38, 41<br>11, 14, 25, 28, 39, 42,<br>4-9, 12, 18-23, 26, 32-37, 40 |

☒  Further documents are listed in the continuation of Box C.      ☐  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| | |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |
| --- | --- |

Form PCT/ISA/210 (second sheet) (January 2015)

**INTERNATIONAL SEARCH REPORT**

| | International application No. |
|---|---|
| | PCT/JP2017/042155 |

C (Continuation).  DOCUMENTS CONSIDERED TO BE RELEVANT

| Category* | Citation of document, with indication, where appropriate, of the relevant passages | Relevant to claim No. |
|---|---|---|
| Y | 平岩明ほか, モバイルテレイグジスタンスのための車載型遠隔操縦ロボット操縦系の構築と遠隔協調作業方式の提案, 第21回日本ロボット学会学術講演会予稿集[CD-ROM], 社団法人日本ロボット学会, 2003, 1F22 (HIRAIWA, Akira et al., "Tele-operation Human Interface for Mobile Tele-existence and Proposal of Tele-collaboration with Tele-robotics". Proceedings of the 21st Annual Conference of the RSJ [CD-ROM]. The Robotics Society of Japan.) | 11, 25, 39 |
| Y | JP 2015-77354 A (WAKAYAMA UNIVERSITY) 23 April 2015, paragraph [0007] (Family: none) | 14, 28, 42 |
| A | 目指せ熟練者並みの効率, 自律制御や仮想現実で実現,日経エレクトロニクス, 2015, no. 1162, pp. 28-35 (Aiming for efficiency on part with experts; Realizing autonomous control and virtual reality. NIKKEI Electronics) | 1-42 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5228855 A

- JP 6323094 A

**Non-patent literature cited in the description**

- Design of TELESAR V for transferring bodily consciousness in telexistence. **C. L. FERNANDO ; M. FURUKAWA ; T. KUROGI ; S. KAMURO ; K. SATO ; K. MINAMIZAWA ; S. TACHI.** Intelligent Robots and Systems (IROS), 2012 IEEE/RSJ International Conference on. IEEE, 2012, 5112-5118

- Whole body multi-modal semi-autonomous teleoperation system of mobile manipulator. **C. HA ; S. PARK ; J. HER ; I. JANG ; Y. LEE ; G. R. CHO ; H. I. SO N ; D. LEE.** IEEE International Conference on Robotics and Automation (ICRA). IEEE, 26 May 2015
- Teleoperation based on the hidden robot concept. **A. KHEDDAR.** Systems, Man and Cybernetics, Part A: Systems and Humans. IEEE Transactions, 2001, vol. 31, 1-13